# EUROPEAN PATENT SPECIFICATION

(11) **EP 3 674 791 B1**
(45) Date of publication and mention of the grant of the patent: **20.07.2022**
(21) Application number: 18847686.5
(22) Date of filing: 11.07.2018
(51) Int. Cl.: C09K 9/02, G02F 1/15, G02F 1/155, G02F 1/1516

(54) **ELECTROCHROMIC ELEMENT AND DISPLAY SYSTEM USING SAME**
ELEKTROCHROMES ELEMENT UND ANZEIGESYSTEM DAMIT
ÉLÉMENT ÉLECTROCHROMIQUE ET SYSTÈME D'AFFICHAGE L'UTILISANT

(30) Priority: 23.08.2017 JP 2017159905
(43) Date of publication of application: 01.07.2020
(73) Proprietor: National Institute for Materials Science, Tsukuba-shi, Ibaraki 305-0047 (JP)
(72) Inventor: HIGUCHI Masayoshi, Tsukuba-shi Ibaraki 305-0047 (JP); SEINO Yuki, Tsukuba-shi Ibaraki 305-0047 (JP); OHASHI Keishi, Tokyo 169-8050 (JP)
(74) Representative: J A Kemp LLP
(86) International application number: PCT/JP2018/026141
(87) International publication number: WO 2019/039121

(56) References cited:
- JP-A- 2007 112 957
- JP-A- 2012 531 940
- JP-A- 2017 522 592
- US-A- 4 035 060
- US-A1- 2009 270 589
- US-A1- 2015 362 817
- US-A1- 2016 011 481
- US-A1- 2016 232 835
- US-A1- 2017 235 204

## Description

### TECHNICAL FIELD

The present invention relates to an electrochromic (EC) device using an electrochromic material and a display system using the same. More specifically, the present invention relates to an electrochromic (EC) device that is complicatedly colored and decolored in a single device and a display system using the same.

### BACKGROUND ART

In recent years, electrochromic materials have attracted attention as display materials. As such electrochromic materials, various organic-metallic hybrid polymers have been developed, and electrochromic devices using these have been known (see, for example, Patent Literatures 1 and 2). Patent Literatures 1 and 2 disclose organic-metallic hybrid polymers in which the organic ligand is a terpyridine group or a phenanthroline group and a metal ion is coordinated to the organic ligand, and electrochromic devices thereof.

Such electrochromic devices are applied to display devices, light control elements, electronic paper, and the like. In such an electrochromic device, a single device is designed to perform coloring and decoloring according to the kind of electrochromic material contained in the device but it is not possible to perform complicated coloring and decoloring such as gradation and non-uniformity. It is desirable that such complicated coloring and decoloring can be performed in a single device since the functionality of existing display systems is enhanced.

In response to such a demand, a display device using an electrochromic layer capable of performing gradation has been developed (see, for example, Patent Literature 3). According to Patent Literature 3, a voltage gradient is caused in the planar direction of the resistance layer by the electrodes provided at both ends of the resistance layer and this enables color display such as gradation display other than monochrome display. However, according to the display device of Patent Literature 3, only gradation display in a single direction can be performed and complicated coloring and decoloring such as two-dimensional and random display is hardly performed.

Meanwhile, electrochromic devices conventionally have a drawback that a difference in electrochromic color change speed can be caused by non-uniform thickness of the electrochromic layer and electrolyte layer or non-uniform electrode resistance value and the shading unevenness is often visible, and efforts have been put to eliminate such a drawback (see, for example, Patent Literature 4). However, it is desirable to develop an electrochromic device which makes use of drawbacks and enables more complicated coloring and decoloring.

US 2016/011481 discloses a multi-layer device comprising a first substrate and a first electrically conductive layer on a surface thereof, the first electrically conductive layer having a sheet resistance to the flow of electrical current through the first electrically conductive layer that varies as a function of position.

US 2017/235204 discloses a multi-layer device comprising a first substrate, a first electrically conductive layer on a surface thereof, and a first current modulating layer, the first electrically conductive layer having a sheet resistance to the flow of electrical current through the first electrically conductive layer that varies as a function of position.

US 2015/362817 discloses an electrochromic device is structured to restrict moisture permeation between an electrochromic stack in the device and an external environment. The electrochromic device includes conductive layers and one or more encapsulation layers, where the encapsulation layers and conductive layers collectively isolate the electrochromic stack from the ambient environment. The encapsulation layers resist moisture permeation, and at least the outer portions of the conductive layers resist moisture permeation. The moisture-resistant electrochromic device can be fabricated based at least in part upon selective removal of one or more outer portions of at least the EC stack, so that at least the encapsulation layer extends over one or more edge portions of the EC stack to isolate the edge portions of the EC stack from the ambient environment. The encapsulation layer can include one or more of an anti-reflective layer, infrared cut-off filter.

US 4,035,060 discloses an electro-optic device comprises a plurality of first electrodes provided on a top substrate and a second electrode provided on a bottom substrate, the first electrodes confronting the second electrode through electro-optical matter which will show electro-optical phenomena by the application of electric field, the first and second electrodes being connected through external impedance elements such as resistors or capacitors to a variable voltage source. In this electro-optic device, the electric field applied between the first and second electrodes are partially changed by various means, for instance, by making the areas of the first electrodes different, or by varying the values of the external impedance elements such as resistors or capacitors, as a result of which the electro-optical matter shows various electro-optical phenomena.

US 2009/270589 discloses (1) a terpyridine monomer that has a strong ability to coordinate with metal atoms, and (2) a polymer material that can be readily switched between a colored state and a colorless state by controlling the electrical potential applied to it and that can be processed. A bis-terpyridine monomer of a first invention comprises a first terpyridyl substituent (A), a second terpyridyl substituent (B), and a spacer that contains at least one benzene ring and links the substituents (A) and (B). A polymer material of a second invention comprises a bis-terpyridine derivative derived from the monomer according to the first invention, a metal ion and a counter anion, or comprise first to Nth bis-terpyridine derivatives (N is an integer of 2 or greater), first to Nth metal ions (N is an integer of 2 or greater) and first to Nth counter anions (N is an integer of 2 or greater).

### CITATION LIST

### PATENT LITERATURE

PATENT LITERATURE 1: JP-A-2007-112957
PATENT LITERATURE 2: JP-A-2012-188517
PATENT LITERATURE 3: JP-A-2012-063657
PATENT LITERATURE 4: JP-A-2016-109853

### SUMMARY OF INVENTION

### TECHNICAL PROBLEM

An object of the present invention is to provide an electrochromic (EC) device which enables complicated coloring and decoloring such as gradation and randomness and a display system using the same.

### SOLUTION TO PROBLEM

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes."

### ADVANTAGEOUS EFFECTS OF INVENTION

The electrochromic (EC) device of the present invention satisfies the conditions (1) and (2), thus voltage distribution (non-uniform potential difference) occurs in the electrochromic layer depending on the conditions (1) and (2) when a voltage is applied to the electrochromic layer, and the accumulated charge amount and the time until the charge amount is accumulated become non-uniform. As a result, the EC device of the present invention enables various coloring and decoloring such as gradation and color unevenness depending on the non-uniformity of charge amount and the non-uniformity (gradual feel) of coloring and decoloring speed depending on the non-uniformity of the time required for charge accumulation.

According to the EC device of the present invention, the potential difference developed in the electrochromic layer can be changed simply by setting the conditions (1) and (2) to desired pattern and shape, and thus complicated coloring and decoloring in two-dimensional gradation and randomness become possible. Moreover, the time required for accumulating the charge can be changed by varying the magnitude of the external voltage, and thus the time until coloring and decoloring can also be changed.

By combining a plurality of such EC devices of the present invention, it is possible to provide an electrochromic (EC) display system which displays more complicated gradation and design.

### BRIEF DESCRIPTION OF DRAWINGS

FIG. 1A is a view schematically illustrating an EC device according to an embodiment of the present invention.
FIG. 1B is a view illustrating an exemplary connection aspect between a first electrode and an external power source.
FIG. 1C is a view illustrating another exemplary connection aspect between a first electrode and an external power source.
FIG. 2A is a view schematically illustrating an exemplary first electrode/second electrode including a plurality of regions having different resistance values from an external power source in the condition (1).
FIG. 2B is a view schematically illustrating another exemplary first electrode/second electrode including a plurality of regions having different resistance values from an external power source in the condition (1).
FIG. 3 is a view illustrating an approximate equivalent circuit corresponding to the EC device illustrated in FIG. 2A.
FIG. 4 is a schematic view illustrating time dependency of charge amount density with respect to various applied voltages in a general EC device.
FIG. 5 is a view schematically illustrating gradation appearance when a voltage is applied to the EC device illustrated in FIG. 2A.
FIG. 6 is a view schematically illustrating another exemplary first electrode/second electrode including a plurality of regions having different resistance values from an external power source in the condition (1).
FIG. 7 is a view schematically illustrating gradation appearance when a voltage is applied to the EC device illustrated in FIG. 6.
FIG. 8 is a view schematically illustrating still another exemplary first electrode/second electrode including a plurality of regions having different resistance values from an external power source in the condition (1).
FIG. 9 is a view illustrating an approximate equivalent circuit corresponding to the EC device illustrated in FIG. 8.
FIG. 10 is a view schematically illustrating an exemplary EC device including two regions having electrolyte layers formed of different electrolyte materials in the condition (2).
FIG. 11 is a view schematically illustrating gradation appearance when a voltage is applied to the EC device illustrated in FIG. 10.
FIG. 12 is a view schematically illustrating an exemplary EC display system of the present invention.
FIG. 13 is a view illustrating time dependency of charge amount density when different voltages are applied to an EC device of Reference Example 1.
FIG. 14 is a schematic view illustrating an ITO substrate in Example 2.
FIG. 15 is a schematic view illustrating an ITO substrate in Example 3.
FIG. 16 is a schematic view illustrating an ITO substrate in Example 4.
FIGS. 17(A) and 17(B) are views illustrating coloring and decoloring appearance of EC devices of Example 2 and Example 3 after voltage application, respectively.
FIG. 18 is a view illustrating coloring and decoloring appearance of an EC device of Example 5 after voltage application.

### DESCRIPTION OF EMBODIMENTS

Hereinafter, typical embodiments of the present invention will be described with reference to the drawings. The present invention is not limited to these embodiments. It should be noted that the same element is denoted by the same reference number and the description thereof is omitted.

### (Embodiment 1)

In Embodiment 1, the configuration and operation of an electrochromic (EC) device 100 of the present invention will be explained.

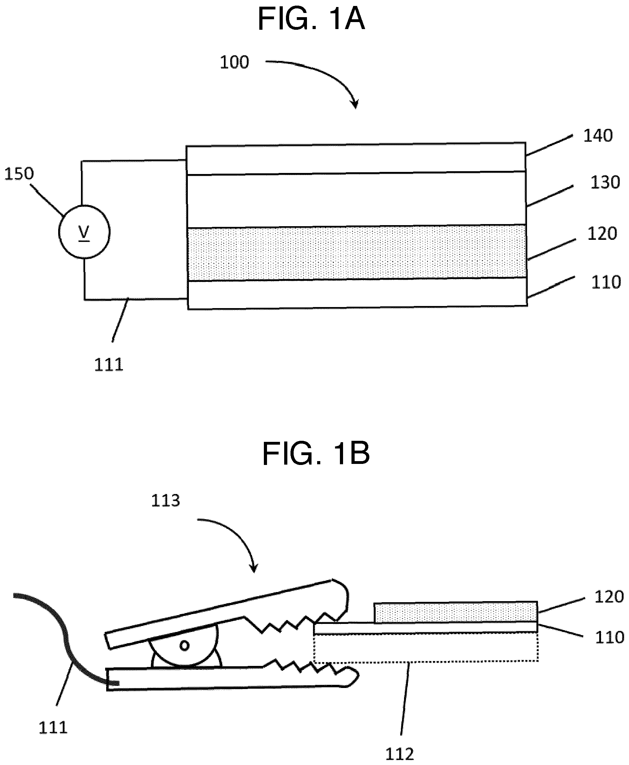

FIG. 1A is a view schematically illustrating an EC device according to the present embodiment.

The EC device 100 of the present invention includes a first electrode 110, an electrochromic (EC) layer 120 which is located on the first electrode 110 and formed of an electrochromic material, an electrolyte layer 130 located on the EC layer 120, and a second electrode 140 located on the electrolyte layer 130. In FIG. 1A, the EC device 100 is connected to an external power source 150 via electric wiring 111.

Incidentally, the first electrode 110 and the second electrode 140 may be provided on a transparent substrate (not illustrated) such as glass or a resin such as plastic. Alternatively, the first electrode 110 or the second electrode 140 may be a transparent conductive substrate such as fluorine-doped tin (FTO) or tin-doped indium oxide (ITO).

FIG. 1B is a view illustrating an exemplary connection aspect between the first electrode and the external power source.

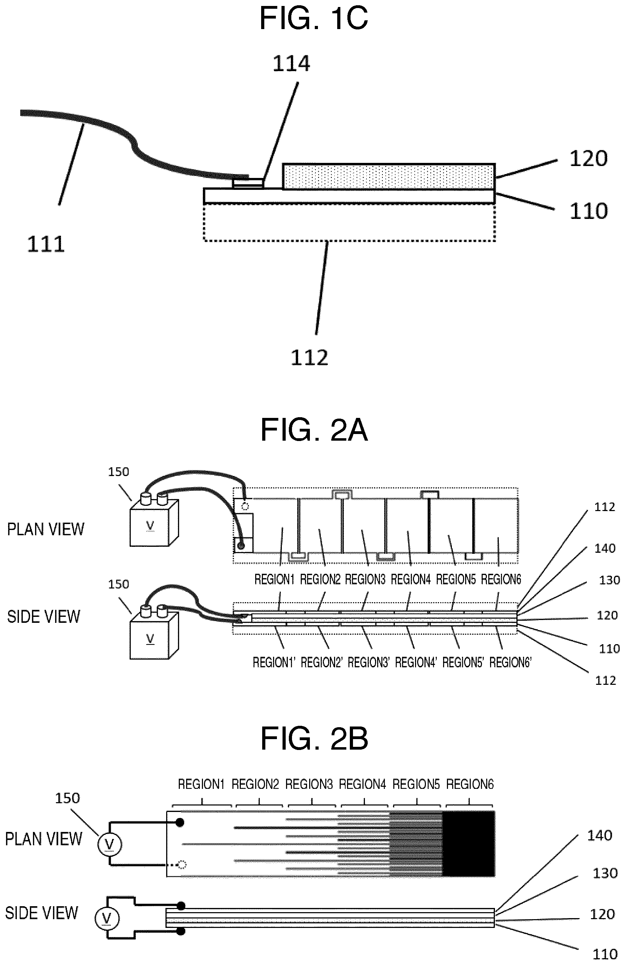

FIG. 1C is a view illustrating another exemplary connection aspect between the first electrode and the external power source.

In FIG. 1A, the connection aspect between the first electrode 110 and the external power source 150 is omitted, but mechanical connection or electrical connection is performed in an experimental apparatus or an actual device. In detail, as illustrated in FIG.1B, the first electrode 110 is located on the substrate 112 and is connected to the external power source 150 via the electric wiring 111 by mechanical connection 113 represented by a crocodile clip or a pin of which the surface is coated with a metal, such as gold (Au), which is hardly oxidized.

Alternatively, as illustrated in FIG. 1C, the first electrode 110 may be located on the substrate 112 and a metal pattern 114 and the electric wiring 111 may be electrically connected to each other on the first electrode 110. For the metal pattern 114, Cu/Ti or Cr deposition or electroless Au plating can be selected depending on the kind of electric wiring. The electrical connection between the metal pattern 114 and the electric wiring 111 can be normal electrical connection such as soldering, silver paste, or wire bonding. Incidentally, the second electrode 140 also has such a connection aspect.

In the EC device 100 of the present invention, by optimizing the first electrode 110 and/or the second electrode 140, and/or the electrolyte layer 130, voltage distribution can be caused in the EC layer 120 by simply applying a voltage without specially controlling the external power source 150. The charge amount accumulated in the EC layer 120 and further the time until the charge is accumulated are different depending on the voltage distribution, and thus the EC device 100 enables various coloring and decoloring such as gradation and color unevenness according to the charge amount and further non-uniformity of coloring and decoloring speed (i.e. a mode in which the color gradually changes, which can be referred to as gradual feel).

In detail, both of the following conditions (1) and (2) are satisfied in the EC device 100 of the present invention.
(1) The first electrode 110 and/or the second electrode 140 each include a plurality of regions having different resistance values from the external power source 150.
(2) The electrolyte layer includes a plurality of regions formed of different electrolyte materials.

Here, the plurality of regions of (1) and (2) generate a pattern of voltage distribution occurring in the EC layer 120.

First, the condition (1) will be specifically described.

FIG. 2A is a view schematically illustrating an exemplary first electrode/second electrode including a plurality of regions having different resistance values from an external power source in the condition (1).

In FIG. 2A, it is assumed that the first electrode 110 and the second electrode 140 are both formed on the transparent substrate 112 and connected to the external power source 150 by the electrical connection illustrated in FIG. 1C. In FIG. 2A, an EC device including a plurality of regions in which the first electrode 110 and the second electrode 140 both have a block shape is illustrated. The plurality of regions constituting the second electrode 140 are connected to the external power source 150 in series and are numbered as regions 1 to 6 from the external power source 150 side. The plurality of regions constituting the corresponding first electrode 110 are also connected to the external power source 150 in series and are numbered as regions 1' to 6' from the external power source 150 side. Here, the regions 1 to 6 are arranged so that the resistance value increases from the external power source 150 side in order. The same applies to the corresponding regions 1' to 6'. Such a plurality of regions are preferably set to have a resistance value in a range of 5Ω or more and 500Ω or less. If the resistance value is in this range, the voltage distribution to be described later can be caused. Incidentally, the resistance value can be determined by a four-terminal method.

FIG. 2B is a view schematically illustrating another exemplary first electrode/second electrode including a plurality of regions having different resistance values from an external power source in the condition (1).

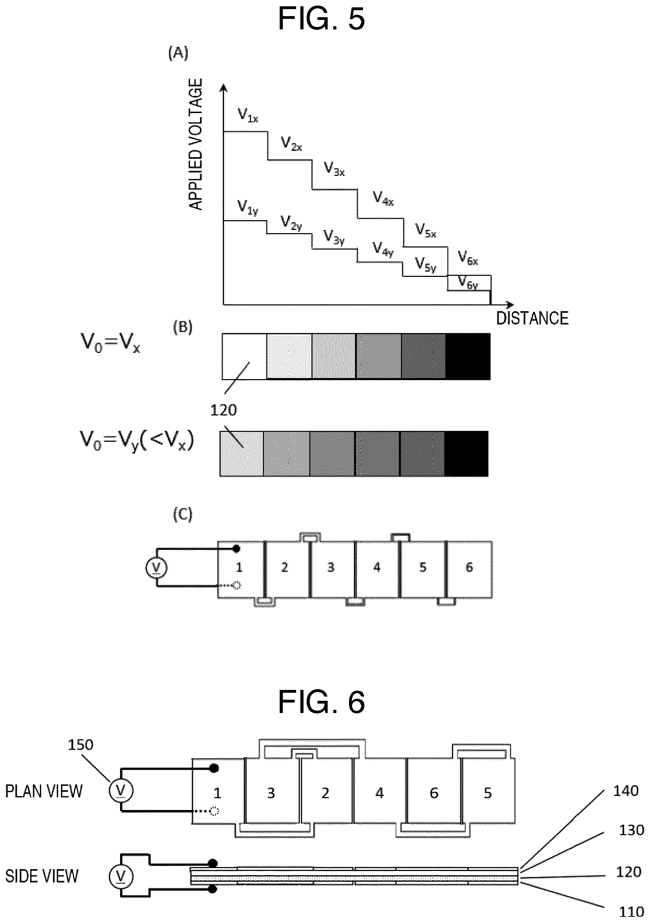

In FIG. 2B, an EC device including a plurality of regions in which the first electrode 110 and the second electrode 140 both have a linear shape is illustrated. The plurality of regions are numbered as regions 1 to 6 from the external power source 150 side. Here, the regions 1 to 6 are arranged so that the resistance value increases from the external power source 150 side in order. Incidentally, in FIG. 2B as well, it is assumed (not illustrated) that the first electrode 110 and the second electrode 140 are both formed on the transparent substrate 112 and connected to the external power source 150 by the electrical connection illustrated in FIG. 1C in the same manner as in FIG. 2A. The electrical connection is also omitted in FIG. 5(C), FIG. 6, FIG. 7(C), and FIG. 8 to be described later in the same manner.

In FIG. 2A and FIG. 2B, an example in which the region having a block shape is configured by a linear electrode having a rectangular shape is illustrated but the electrode is not limited to a rectangular shape. Moreover, the electrode is not required to be a linear electrode and the entire region having a block shape may be an electrode.

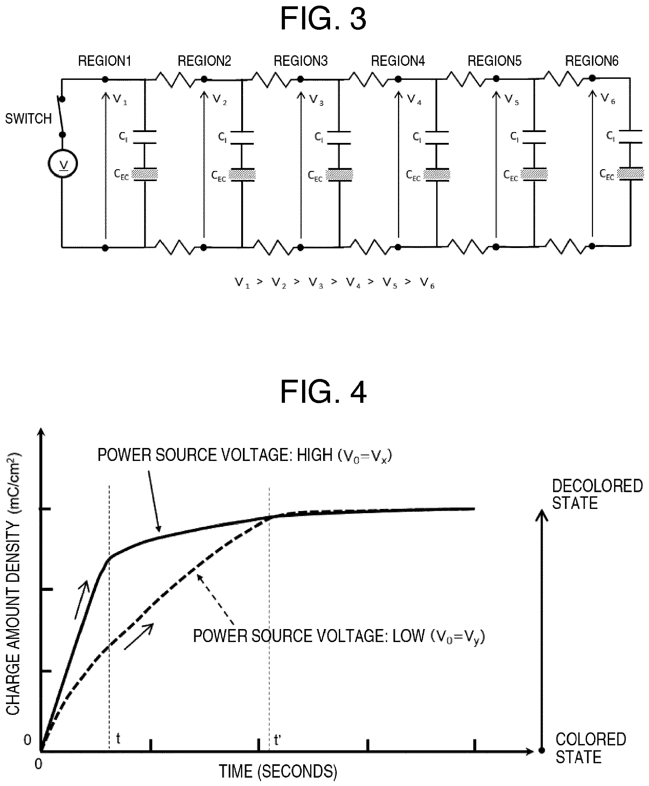

FIG. 3 is a view illustrating an approximate equivalent circuit corresponding to the EC device illustrated in FIG. 2A.

In FIG. 3, C_{I} denotes the interfacial electric double layer capacity between the EC layer 120 and the electrolyte layer 130, C_{EC} denotes the capacity of the EC layer 120, and V₁ to V₆ denote voltages applied between the electrodes, namely, to the EC layer. C_{I} and C_{EC} are both a constant value, but V₁ to V₆ satisfy V₁ > V₂ > V₃ > V₄ > V₅ > V₆ in a case in which regions 1 to 6 are arranged so that the resistance value increases from the external power source 150 side in order. By this, voltage distribution occurs in the respective regions of the EC layer 120 corresponding to the regions 1 to 6 (regions 1' to 6'). A similar voltage gradient is formed in the EC device illustrated in FIG. 2B as well.

Incidentally, a case in which both the first electrode 110 and the second electrode 140 include a plurality of regions having a block shape has been described in FIG. 2A. Even when either the first electrode 110 or the second electrode 140 is a full-surface electrode, a similar voltage gradient is formed but the magnitude of voltage gradient decreases.

Furthermore, the plurality of regions may each include a finer region having the same resistance value from the external power source 150. By this, the time until decoloring or coloring can be lengthened and thus more gradual feel can be clearly generated.

FIG. 4 is a schematic view illustrating the time dependency of charge amount density with respect to various applied voltages in a general EC device.

The time dependency of charge amount density accumulated in the EC layer when voltages Vₓ and V_{y} (where Vₓ > V_{y}) are applied to a general EC device in which the first electrode 110 and the second electrode 140 are full-surface electrodes and the electrolyte layer 130 is uniform is illustrated in FIG. 4.

If a voltage equal to or more than the redox potential of the electrochromic material constituting the EC layer, for example, Vₓ is applied, the electric charge is accumulated instantaneously (time t) and a decolored state is attained as indicated by a solid line. On the other hand, if a voltage less than the redox potential of the electrochromic material, for example, V_{y} is applied, the electric charge is gently accumulated and a decolored state is attained eventually (time t' > t) as indicated by a dotted line. In this manner, it can be seen that the coloring and decoloring speed varies depending on the magnitude of applied voltage. If this change in magnitude of applied voltage (namely, voltage control by the external power source 150) and the voltage distribution caused by the resistance change of the electrode described in FIG. 2A, FIG. 2B, and FIG. 3 are utilized, non-uniformity (gradual feel) of coloring and decoloring speed can be generated in addition to gradation and color unevenness according to the charge amount. This will be described in detail with reference to FIG. 5.

FIG. 5 is a view schematically illustrating gradation appearance when a voltage is applied to the EC device illustrated in FIG. 2A.

FIG. 5(A) schematically illustrates changes in voltage in a plurality of regions when Vₓ and V_{y} (FIG. 4) are each applied to the EC device. The horizontal axis indicates the distance on the EC layer 120 corresponding to each region from the external power source 150, and the vertical axis indicates the magnitude of voltage applied to each region. FIG. 5(B) schematically illustrates a colored state (gradation) of the EC layer 120 after a certain time (time t) when Vₓ and V_{y} are each applied to the EC device. FIG. 5(C) illustrates the same plan view as that in FIG. 2A for ease of understanding.

When the voltage: V₀ = Vₓ is applied to the EC device 100 by the external power source 150, the voltages applied to the EC layers 120 in the regions 1 to 6 become V₁ₓ > V₂ₓ > V₃ₓ > V₄ₓ > V₅ₓ > V₆ₓ, respectively, to correspond to the order of the resistance values of the regions 1 to 6 of the electrode as illustrated in FIG. 5(A). Here, referring to the time dependency of charge amount density in FIG. 4, the voltage V₁ₓ applied to the region 1 is the value closest to Vₓ and thus charges are relatively quickly accumulated and decoloring occurs as illustrated at the upper part of FIG. 5(B). However, in V₂ₓ to V₆ₓ, which are voltages lower than V₁ₓ, the charges to cause decoloring are not accumulated, the state stepwisely changes from a state close to decoloring to a state in which decoloring does not occur at all (i.e. initial colored state). In this manner, the voltage applied to the respective regions of the EC layer 120 corresponding to the regions 1 to 6 decreases in order as an electrode including the regions 1 to 6 of which the resistance value increases from the external power source 150 in order. As a result, the charge amounts accumulated in the respective regions of the EC layer 120 corresponding to the regions 1 to 6 decrease in order and gradation occurs in the order of the regions 1 to 6.

On the other hand, when the voltage: V₀ = V_{y} (<Vₓ) is applied to the EC device 100 by the external power source 150, the voltages applied to the EC layers 120 in the regions 1 to 6 become V_{1y} > V_{2y} > V_{3y} > V_{4y} > V_{5y} > V_{6y}, respectively, to correspond to the order of the resistance values of the regions 1 to 6 of the electrode as illustrated in FIG. 5(A). Here, V_{y} is smaller than Vₓ, thus referring to the time dependency of charge amount density in FIG. 4, the voltage V_{1y} applied to the region 1 is the value closest to V_{y} but charges are not sufficiently accumulated in the time t and the state becomes a state close to coloring as illustrated at the lower part of FIG. 5(B). Moreover, at V_{2y} to V_{6y}, which are voltages lower than V_{1y}, charges are not further accumulated in the time t and the state stepwisely changes from a state close to coloring to a state in which decoloring does not occur at all (i.e. initial colored state). In this manner, different gradations can be generated according to the magnitude of voltage of the external power source 150.

Here, in FIG. 5, description has been made by taking the time t in FIG. 4 as the reference but charges are slowly accumulated over time in a case in which charge accumulation does not end completely in the time t. As a result, the coloring and decoloring speed is different in every region and thus the observer can attain gradual feel in addition to the color change of gradation.

In FIG. 2B as well, it is evident that the resistance value sequentially increases in the regions 1 to 6 from the external power source 150 side and a similar effect can be attained in the same manner as in FIG. 2A. Incidentally, in FIG. 2B, the first electrode 110 is a full-surface electrode, and thus the potential difference caused in the EC device in FIG. 2B is smaller than that in FIG. 2A in a case in which the voltage applied by the external power source 150 is constant. From this fact, it is preferable that the plurality of regions of the first electrode 110 and the plurality of regions of the second electrode 140 are disposed so as to face each other in the case of utilizing a large potential difference as illustrated in FIG. 2A.

In addition, in FIG. 2A and FIG.2B, gradation in one direction is achieved as the plurality of regions are arranged in one direction so that the respective resistance values thereof sequentially increase from one toward the other (i.e. toward the direction going away from the external power source 150 in FIG. 2A and FIG.2B). However, the plurality of regions are arranged in two or more directions, making two-dimensional gradation possible.

Incidentally, as the voltage V₀ of the external power source 150 is lowered or lowered to zero (switched off) in the time t, the gradation change with time can be delayed or the gradation can be fixed to the state at the time t.

FIG. 6 is a view schematically illustrating another exemplary first electrode/second electrode including a plurality of regions having different resistance values from an external power source in the condition (1).

In FIG. 6, an EC device including a plurality of regions in which the first electrode 110 and the second electrode 140 both have a block shape in the same manner as in FIG. 2A is illustrated, but the difference is that the plurality of regions are arranged so that the magnitude of resistance value randomly changes in the region 1, region 3, region 2, region 4, region 6, and region 5 from the external power source 150 side. The corresponding regions 1' to 6' are also arranged so that the resistance value randomly changes in the same manner.

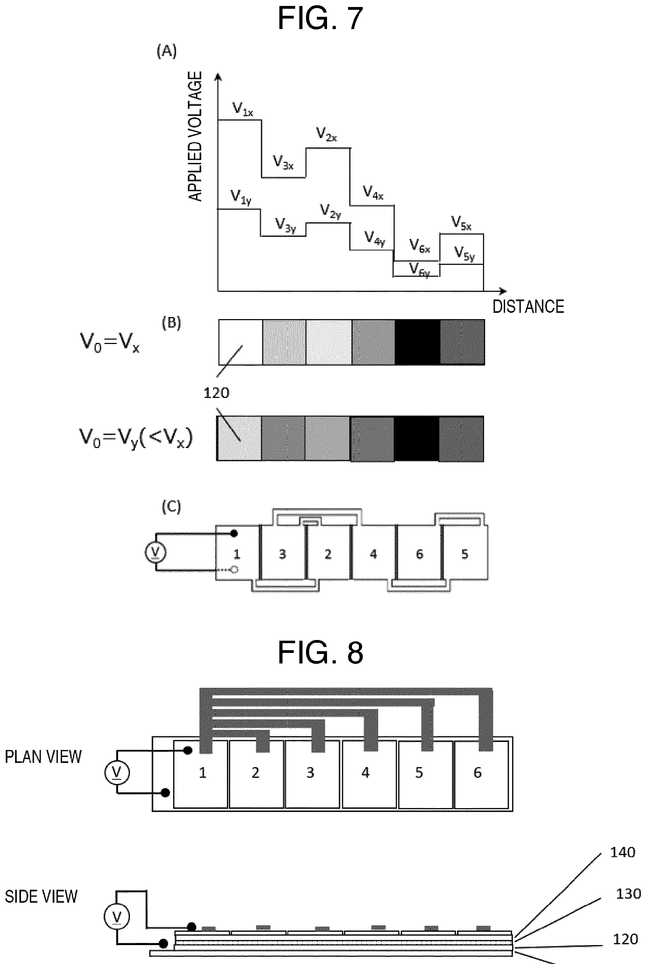

FIG. 7 is a view schematically illustrating the gradation appearance when a voltage is applied to the EC device illustrated in FIG. 6.

FIG. 7(A) schematically illustrates changes in voltage in a plurality of regions when Vₓ and V_{y} (see FIG. 4) are each applied to the EC device. The horizontal axis indicates the distance on the EC layer 120 corresponding to each region from the external power source 150, and the vertical axis indicates the magnitude of voltage applied to each region. FIG. 7(B) schematically illustrates a colored state of the EC layer 120 after a certain time (time t) when Vₓ and V_{y} are each applied to the EC device. FIG. 7(C) illustrates the same plan view as that in FIG. 6 for ease of understanding.

When the voltage: V₀ = Vₓ or V_{y} is applied to the EC device 100 by the external power source 150, the voltages applied to the EC layers 120 in the regions 1 to 6 change to correspond to the order of the resistance values of the regions 1 to 6 of the electrode as illustrated in FIG. 7(A). As a result, the charge amounts accumulated in the respective regions of the EC layer 120 corresponding to the regions 1 to 6 also change and coloring and decoloring corresponding to the regions 1 to 6 randomly occur. In this manner, random coloring and decoloring can be performed simply by arranging a plurality of regions so that the respective resistance values thereof are random.

Here as well, in FIG. 7, description has been made by taking the time t in FIG. 4 as the reference but charges are slowly accumulated over time in a case in which charge accumulation does not end completely in the time t. As a result, the coloring and decoloring speed is different in every region and thus the observer can attain gradual feel in addition to the random color change.

FIG. 8 is a view schematically illustrating still another exemplary first electrode/second electrode including a plurality of regions having different resistance values from an external power source in the condition (1).

In FIG. 8, an EC device including a plurality of regions in which the first electrode 110 is a full-surface electrode and the second electrode 140 has a block shape is illustrated. The plurality of regions constituting the second electrode 140 are connected to the external power source 150 in parallel and are numbered as regions 1 to 6 from the external power source 150 side. Here, the regions 1 to 6 are arranged so that the resistance value increases from the external power source 150 side in order.

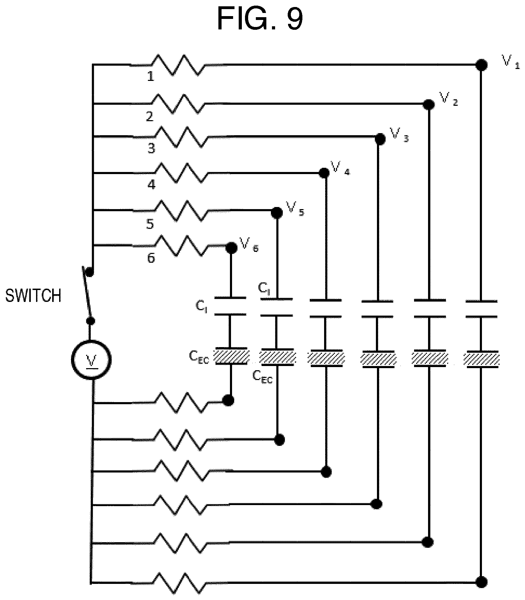

FIG. 9 is a view illustrating an approximate equivalent circuit corresponding to the EC device illustrated in FIG. 8.

In FIG. 9, C_{I} denotes the interfacial electric double layer capacity between the EC layer 120 and the electrolyte layer 130, C_{EC} denotes the capacity of the EC layer 120, and V₁ to V₆ denote voltages applied between the electrodes, namely, to the EC layer. C_{I} and C_{EC} are both a constant value, but V₁ to V₆ satisfy V₁ > V₂ > V₃ > V₄ > V₅ > V₆ in a case in which regions 1 to 6 are arranged so that the resistance value increases from the external power source 150 side in order. As a consequence of this arrangement, voltage distribution occurs in the respective regions of the EC layer 120 corresponding to the regions 1 to 6. Hence, in the EC device of FIG. 8 as well, gradation of coloring and decoloring can be achieved in the same manner as in the EC device in FIG. 2A and FIG. 2B.

Here as well, it is as described above that the gradation change with time can be delayed or the gradation can be fixed to the state at the time t as the voltage V₀ of the external power source 150 is lowered or lowered to zero (switched off) in the time t.

The materials for the first electrode 110 and second electrode 140 are not particularly limited, but the first electrode 110 and the second electrode 140 are each a transparent electrode. This makes it possible to visually recognize coloring and decoloring of the EC layer 120 even in the case of any pattern. The material for the transparent electrode is not particularly limited and can be, for example, SnO₂, In₂O₃ or ITO which is a mixture of In₂O₃ and SnO₂.

Incidentally, as illustrated in FIG. 8, an electrode (gray region in the drawing) which connects the respective block-shaped electrodes in parallel may be provided. In a case in which the resistance value is controlled by such an electrode, an electrode material having a low resistance such as gold, copper, aluminum, and silver or an electrode material having a high resistance such as NiCr, Ta, TaN, and TaSiO₂ can be used.

Configurations in which the first electrode 110 and/or the second electrode 140 include a plurality of regions having different resistance values by the electrode shape have been described with reference to FIGS. 2 to 9, but the plurality of regions is not only formed by the differences in electrode shape. The plurality of regions is further formed by providing a plurality of resistors having different resistance values between the first electrode 110 and the EC layer 120 and/or between the electrolyte layer 130 and the second electrode 140. The plurality of resistors are varistors or variable resistance elements.

Next, the condition (2) will be specifically described.

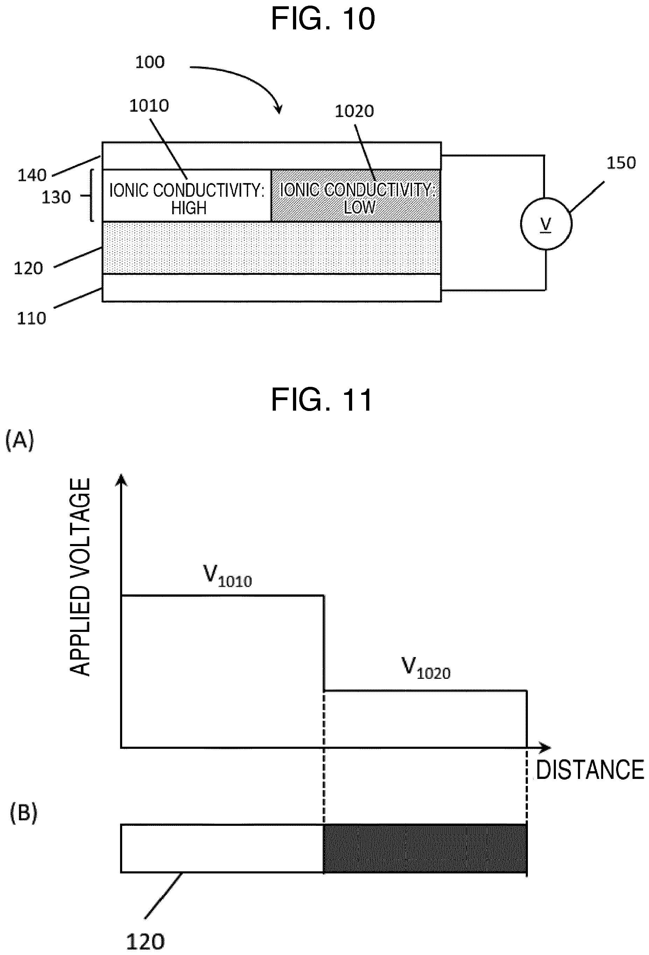

FIG. 10 is a view schematically illustrating an exemplary EC device including two regions having electrolyte layers formed of different electrolyte materials in the condition (2).

FIG. 11 is a view schematically illustrating the gradation appearance when a voltage is applied to the EC device illustrated in FIG. 10.

In FIG. 10, an EC device 100 in which the electrolyte layer 130 includes a region 1010 having a high ionic conductivity and a region 1020 having a low ionic conductivity.

FIG. 11(A) schematically illustrates changes in voltage in two regions when Vₓ (see FIG. 4) is applied to the EC device. The horizontal axis indicates the distance on the EC layer 120 corresponding to each region from the external power source 150, and the vertical axis indicates the magnitude of voltage applied to each region. FIG. 11(B) schematically illustrates a colored state of the EC layer 120 after a certain time (time t) when Vₓ is applied to the EC device.

As illustrated in FIG. 11(A), when the voltage: V₀ = Vₓ is applied to the EC device 100 by the external power source 150, the voltages applied to the EC layers 120 to correspond to the order of ionic conductivities of the region 1010 and region 1020 of the electrolyte layer 130 become V₁₀₁₀ > V₁₀₂₀, respectively. Here, referring to the time dependency of charge amount density in FIG. 4, the voltage V₁₀₁₀ applied to the region 1010 has the value closest to Vₓ and thus charges are relatively quickly accumulated and decoloring occurs as illustrated in FIG. 11(B). However, in V₁₀₂₀ which is a voltage lower than V₁₀₁₀, the charges to cause decoloring are not accumulated, and a state in which decoloring does not occur is maintained. In this manner, voltage distribution can be generated in the respective regions of the EC layer 120 corresponding to the region 1010 and the region 1020 by using the region 1010 and region 1020 formed of electrolyte materials having different ionic conductivities. As a result, the charge amounts accumulated in the respective regions of the EC layer 120 corresponding to the region 1010 and the region 1020 are different from each other and gradation occurs.

The electrolyte material used in the electrolyte layer 130 is not particularly limited but preferably has an ionic conductivity in a range of 0.01 S/m or more and 0.5 S/m or less. For this reason, voltage distribution can be generated in the EC layer 120 depending on the ionic conductivity if a voltage is applied to the EC device 100 from the external power source 150. Incidentally, the ionic conductivity of electrolyte material is calculated by an impedance method.

In FIG. 10, a case in which the electrolyte layer 130 includes two different regions is illustrated for simplicity, but the number and arrangement of the plurality of regions of the electrolyte layer 130 are not limited thereto. One-dimensional gradation can be achieved if a plurality of regions are arranged in one direction so that the respective ionic conductivities thereof sequentially increase from the region at one end toward the region at the other end. In the present invention the plurality of regions are arranged in two or more directions, so that two-dimensional gradation is possible. In addition, random coloring and decoloring is possible if a plurality of regions are arranged so that the respective ionic conductivities thereof are random.

Next, the materials for the respective elements constituting the EC device 100 will be described.

The first electrode 110 and the second electrode 140 are as described above, and the description thereof is thus omitted.

The EC layer 120 is not particularly limited as long as it is formed of an electrochromic material with low power consumption. The electrochromic material may preferably be an electrochromic material containing the organic-metallic hybrid polymer described above. Specifically, the electrochromic material is an electrochromic material containing an organic-metallic hybrid polymer containing an organic ligand and a metal ion coordinated to the organic ligand. Such an organic-metallic hybrid polymer has low power consumption and thus can be easily colored and decolored by an electric signal converted from an electromagnetic wave signal.

Here, the organic-metallic hybrid polymer will be described in detail. The organic ligand is an organic compound which can coordinate a metal ion and can be polymerized by polymerization. The organic ligand is selected from the group consisting of a terpyridine group, a phenanthroline group, and derivatives of these. The organic ligand constituting the organic-metallic hybrid polymer may be singular kind or plural kinds. As these organic ligands coordinate metal ions and form complexes, organic ligands and metal ions are alternately linked to each other to constitute organic-metallic hybrid polymers.

The terpyridine group is typically a residue of 2,2',6',2"-terpyridine but may be derivatives thereof having various substituents. Exemplary substituents include a halogen atom, a hydrocarbon group, a hydroxyl group, an alkoxy group (for example, C₁ to C₁₀), a carbonyl group, a carboxylic acid ester group (for example, C₁ to C₁₀), an amino group, a substituted amino group, an amide group, a substituted amide group, a cyano group, a nitro group and the like. Examples of the hydrocarbon group include linear or branched alkyl groups such as C₁ to C₁₀, and specific examples thereof include a methyl group, an ethyl group, a n-propyl group, an i-propyl group, a n-butyl group, and a t-butyl group. Furthermore, examples of the substituent that these substituents may have include C₁ to C₁₀ alkyl groups such as a methyl group, an ethyl group, and a hexyl group, C₁ to C₁₀ alkoxy groups such as a methoxy group and a butoxy group, and halogen atoms such as chlorine and bromine, etc., but are not limited thereto.

A phenanthroline group is one in which any two carbon atoms in phenanthrene are substituted with nitrogen atoms but may be derivatives thereof having various substituents. Exemplary substituents that the derivatives can have are a methyl group, a t-butyl group, a phenyl group, a thienyl group, a bithienyl group, a tertienyl group, a phenylacetyl group, and the like but are not limited thereto.

The metal ion can be any metal ion of which the valence can be changed by a redox reaction but is preferably at least one metal ion selected from the group consisting of Pt, Cu, Ni, Pd, Ag, Mo, Fe, Co, Ru, Rh, Eu, Zn, and Mn. These metal ions are coordinated to the above-described organic ligands. More preferably, a hexacoordinate metal ion is selected in a case in which the organic ligand is a terpyridine group or any derivative thereof, and a tetracoordinate metal ion is selected in a case in which the organic ligand is a phenanthroline group or any derivative thereof.

In the present invention, the organic-metallic hybrid polymer is represented by a formula selected from the group consisting of Formulas (I), (II), and (III). In an embodiment, the organic-metallic hybrid polymer may be a mixture of these.

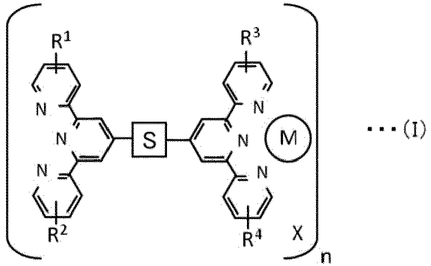

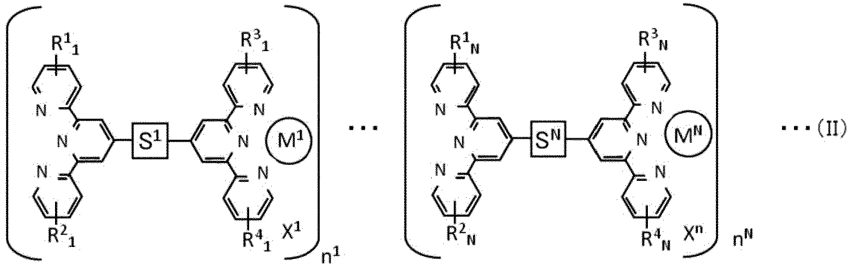

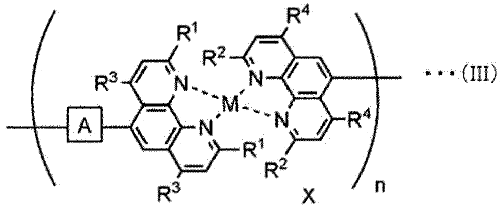

The organic-metallic hybrid polymers represented by Formulas (I) and (II) both contain a terpyridine group or a derivative thereof as an organic ligand and a metal ion coordinated thereto. The organic-metallic hybrid polymers represented by Formula (III) contains a phenanthroline group or a derivative thereof as an organic ligand and a metal ion coordinated thereto.

In Formula (I), M denotes a metal ion, X denotes a counter anion, S denotes a spacer containing a carbon atom and a hydrogen atom or a spacer directly connecting two terpyridine groups to each other, R¹ to R⁴ each independently denote a hydrogen atom or a substituent, and n is an integer of 2 or more indicating a degree of polymerization.

In Formula (II), M¹ to M^{N} (N is an integer of 2 or more) each independently denote a metal ion having a different redox potential, X¹ to Xⁿ (n is an integer of 2 or more) each independently denote a counter anion, S¹ to S^{N} (N is an integer of 2 or more) each independently denote a spacer containing a carbon atom and a hydrogen atom or a spacer directly connecting two terpyridine groups to each other, R¹₁ to R¹_{N}, R²₁ to R²_{N}, R³₁ to R³_{N}, and R⁴₁ to R⁴_{N} (N is an integer of 2 or more) each independently denote a hydrogen atom or a substituent, and n¹ to n^{N} are each independently an integer of 2 or more indicating the degree of polymerization.

Here, the metal ion in Formulas (I) and (II) can be preferably at least one metal ion selected from the group consisting of Fe, Co, Ni, Zn, and Rh. These metal ions can take a hexacoordinate form and thus can form complexes with the organic ligands.

The counter anion in Formulas (I) and (II) can be selected from the group consisting of an acetate ion, a phosphate ion, a chloride ion, a phosphorus hexafluoride ion, a boron tetrafluoride ion, and a polyoxometalate. The organic-metallic hybrid polymer can be made electrically neutral and stabilized by these counter anions.

In a case in which the spacer in Formulas (I) and (II) is a spacer containing a carbon atom and a hydrogen atom, such a spacer can be a divalent organic group containing a carbon atom and a hydrogen atom. Examples thereof include an aliphatic hydrocarbon group, an alicyclic hydrocarbon group, an aromatic hydrocarbon group, and a heterocyclic group. Among these, arylene groups such as a phenylene group and a biphenylene group are preferable. Moreover, these hydrocarbon groups may have substituents such as alkyl groups such as a methyl group, an ethyl group, and a hexyl group, alkoxy groups such as a methoxy group and a butoxy group, halogen atoms such as chlorine and bromine. Moreover, such a spacer may further contain an oxygen atom and a sulfur atom. An oxygen atom and a sulfur atom have a modification ability and are thus advantageous for the material design of organic-metallic hybrid polymer.

Among the divalent arylene groups, the following arylene groups are preferable. The organic-metallic hybrid polymer can be stabilized by these arylene groups. 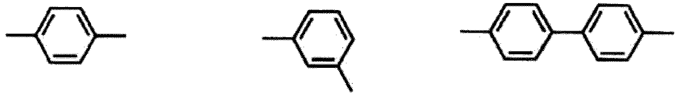 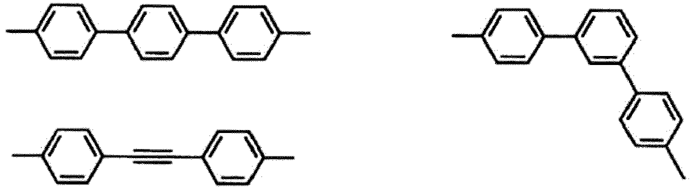 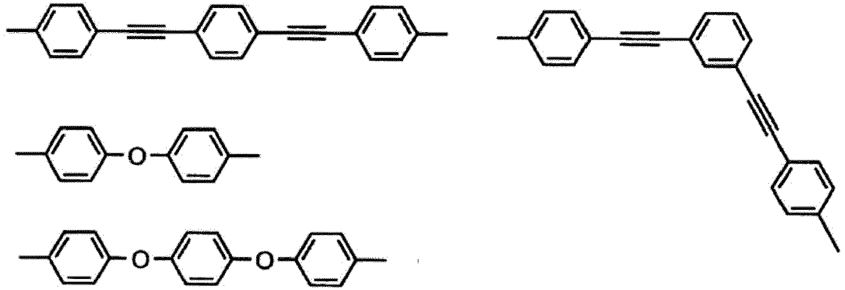 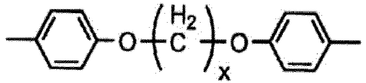 **x** = **4,6,8,10,12,14,16,18,20**

Examples of the aliphatic hydrocarbon group constituting the spacer include alkylene groups such as C₁ to C₆, and specific examples thereof include a methylene group, an ethylene group, a n-propylene group, an i-propylene group, a n-butylene group, and a t-butylene group.

Furthermore, examples of the divalent organic group constituting the spacer may include these groups having substituents such as C₁ to C₆ alkyl groups such as a methyl group, an ethyl group, and a hexyl group, C₁ to C₆ alkoxy groups such as a methoxy group and a butoxy group, and halogen atoms such as chlorine and bromine into these groups may be used.

R¹ to R⁴ in Formula (I) and R¹₁ to R¹_{N}, R²₁ to R²_{N}, R³_{N} to R³_{N}, and R⁴₁ to R⁴_{N} in Formula (II) each independently denote a hydrogen atom or a substituent, and examples of the substituent include a halogen atom, a hydrocarbon group, a hydroxyl group, an alkoxy group (for example, C₁ to C₁₀), a carbonyl group, a carboxylic acid ester group (for example, C₁ to C₁₀), an amino group, a substituted amino group, an amide group, a substituted amide group, a cyano group, and a nitro group. Examples of the hydrocarbon group include linear or branched alkyl groups such as C₁ to C₁₀, and specific examples thereof include a methyl group, an ethyl group, a n-propyl group, an i-propyl group, a n-butyl group, and a t-butyl group. Furthermore, examples of the substituent that these substituents may have include these hydrocarbon groups having substituents such as C₁ to C₁₀ alkyl groups such as a methyl group, an ethyl group, and a hexyl group, C₁ to C₁₀ alkoxy groups such as a methoxy group and a butoxy group, and halogen atoms such as chlorine and bromine, but the substituent is not limited thereto.

In Formula (I), n is an integer of 2 or more indicating the degree of polymerization and is, for example, 2 to 5000, preferably 10 to 1000. In Formula (II), n¹ to n^{N} are each independently an integer of 2 or more indicating the degree of polymerization and the total n¹ + n²... + n^{N} thereof is, for example, 2 to 5000, preferably 10 to 1000.

In Formula (III), M denotes a metal ion, X denotes a counter anion, A denotes a spacer containing a carbon atom and a hydrogen atom or a spacer directly connecting two phenanthroline groups to each other, R¹ to R⁴ each independently denote a hydrogen atom or a substituent, and n is an integer of 2 or more indicating the degree of polymerization.

Here, the metal ion in Formula (III) can be at least one metal ion selected from the group consisting of Pt, Cu, Ni, Ag, and Pd. These metal ions can take a tetracoordinate form and thus can make complexes with the organic ligands. The counter anion in Formula (III) can be selected from the group consisting of a perchlorate ion, a triflate ion, a boron tetrafluoride ion, a chloride ion, and a hexafluorophosphate ion. The organic-metallic hybrid polymer can be made electrically neutral and stabilized by these counter anions.

In a case in which the spacer in Formula (III) is a spacer containing a carbon atom and a hydrogen atom, typical examples of the spacer include a phenyl group, a biphenyl group, a terphenyl group, a thienyl group, a bithienyl group, and a tertienyl group, as illustrated below. Also, in order to enhance the solubility of the bis(phenanthroline) derivative, it is desirable to use a spacer modified with an alkyl group (having 1 to 16 carbon atoms) or an alkoxy group (having 1 to 16 carbon atoms). Furthermore, a spacer in which phenyl groups are linked to each other through a dioxoalkyl group (having 2 to 16 carbon atoms) can also be used. 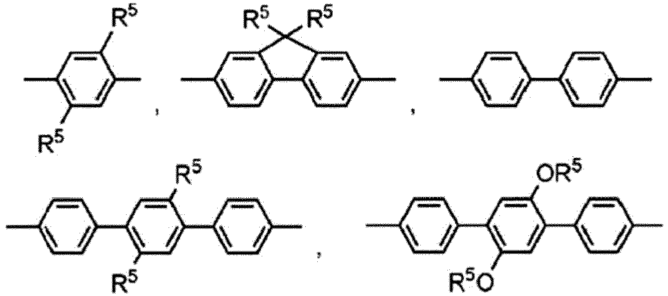 R⁵ = H, CₘH₂ₘ₊₁ (m = 1-16) 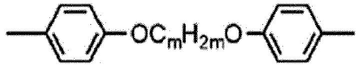 (m = 2-16)

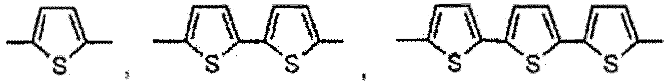

Examples of R¹ and R² in Formula (III) include hydrogen, a methyl group, a t-butyl group, a phenyl group, a thienyl group, a bithienyl group, and a tertienyl group, as illustrated below. Examples of R³ and R⁴ in Formula (III) include hydrogen, a phenyl group, and a phenylacetyl group.

R¹, R² = H- , Me- , *t*-Bu- , 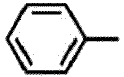 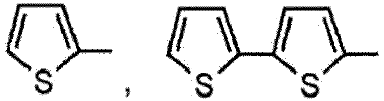 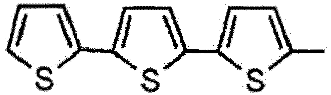 R³, R⁴ = H- ,

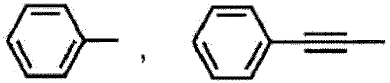

In Formula (III), n is an integer of 2 or more indicating the degree of polymerization and is, for example, 2 to 5000, preferably 10 to 1000.

The organic-metallic hybrid polymer exhibits color based on the charge transfer and absorption from a metal ion to an organic ligand. In other words, the organic-metallic hybrid polymer is in a decolored state in which the color disappears when being electrochemically oxidized and the organic-metallic hybrid polymer is in a colored state when being electrochemically reduced. It is possible to repeatedly cause this phenomenon. Hence, such an organic-metallic hybrid polymer functions as an electrochromic material with low power consumption. In addition, the organic-metallic hybrid polymer described above can be produced with reference to Patent Literature 1 and Patent Literature 2, for example.

Also, the EC layer 120 may contain an ionic liquid. Here, the ionic liquid can form an ionic bond with the organic-metallic hybrid polymer described above and can be thus a composite. As a composite is formed, the counter anion from the adjacent electrolyte layer 130 can be retained in the composite and quick response characteristics can be thus achieved.

As such an ionic liquid, any ionic liquid in which the organic-metallic hybrid polymer forms an ionic bond can be employed. Specific examples thereof include a combination of at least one anion selected from the group consisting of tetrafluoroborate, hexafluorophosphate, bis(trifluoromethanesulfonyl)imide, and bis(pentafluoroethylsulfonyl)imide with at least one cation selected from the group consisting of imidazolium, pyrrolidinium, and tetraalkylammonium, but are not limited thereto.

More preferably, the ionic liquid has a melting point equal to or less than room temperature. By this, the gelatinization of the polymer in the manufacture of electrochromic device can be promoted. Still more preferably, the ionic liquid has a melting point of 0°C or less. This is advantageous in the manufacture of electrochromic device since the ionic liquid is certainly liquid at room temperature. In addition, in the present specification, the term "room temperature" is intended to mean a temperature range higher than 0°C and equal to or less than 50°C.

More preferably, the ionic liquid has a potential window at least ranging from a negative potential of -1 V vs Ag/Ag⁺ or less to a positive potential of +2 V vs Ag/Ag⁺ or more. Still more preferably, the ionic liquid has a potential window ranging from a negative potential of -3 V vs Ag/Ag⁺ or less to a positive potential of +3 V vs Ag/Ag⁺ or more. By this, the electrochemical stability of the ionic liquid can be further enhanced, and the durability of electrochromic device can be thus further improved.

The electrolyte layer 130 has a function of compensating for the charge with respect to a change in valence associated with a redox reaction of the metal ion in the EC layer 120. The electrolyte layer 130 is not particularly limited as long as it is formed of a material having such a function but specifically preferably contains at least a polymer and a supporting salt. The function of charge compensation described above can be achieved by the polymer and the supporting salt.

The polymer may preferably be at least one selected from the group consisting of polymethyl methacrylate (PMMA), polyethylene oxide (PEO), poly(vinylidene fluoride-cohexafluoroisopropyl) (PVdF-co-PHFP), polypropylene carbonate (PPC), polycarbonate, and polyacrylonitrile. These polymers are advantageous for the configuration of gel electrolyte layer.

The supporting salt may preferably be at least one selected from the group consisting of LiClO₄, LiBF₄, LiAsF₆, LiPF₆, LiCF₃SO₃, LiCF₃COO, lithium bis(trifluoromethanesulfonyl)imide (LiTFSI), LiCH₃COO, tetrabutylammonium perchlorate, tetraethylammonium perchlorate, KCl, NaClO₃, NaCl, NaBF₄, NaSCN, KBF₄, Mg(ClO₄)₂, and Mg(BF₄)₂. These supporting salts effectively function as a counter anion of the organic-metallic hybrid polymer.

The electrolyte layer 130 preferably contains at least one plasticizer selected from the group consisting of propylene carbonate (PC), ethylene carbonate, dimethyl carbonate, diethyl carbonate, γ-butyrolactone, succinonitrile, and an ionic liquid. Since the ionic liquid usable as a plasticizer may be those as described above, the description thereof is omitted. For example, if the above-described polymer and supporting salt in addition to such a plasticizer are dissolved in a dehydrated solvent (to be described later), the solution is casted, and then the solvent is removed, a gel electrolyte layer in which a polymer, a plasticizer, and a supporting salt are present in a uniformly dispersed state can be formed. Therefore, this can result in the improvement and stabilization of electrochromic device properties.

Moreover, the electrolyte layer 130 may further contain at least one ion storage material selected from the group consisting of a viologen, N,N,N',N'-tetramethyl-p-phenylenediamine, and an organometallic complex. By this, it is possible to suppress the accumulation of charges between the first electrode 110 and the EC layer 120 and thus to suppress physical damage to the first electrode 110 caused by the accumulation of charges. Exemplary organometallic complexes are ferrocene, Prussian blue, porphyrin, and the like. Incidentally, the organic-metallic hybrid polymer contained in the EC layer 120 can also suppress the accumulation of charges, but damage to the first electrode 110 and the substrate including the first electrode 110 can be more effectively prevented if the above-described ion storage material is further contained.

In addition, it is preferable that the ionic conductivity of the electrolyte material which satisfies the condition (2) and is used in the EC device 100 is controlled as described above. For example, the viscosity of the electrolyte material can be varied by changing the kind and concentration of the polymer, but usually, the ionic conductivity increases as the viscosity is decreased and the ionic conductivity decreases as the viscosity is increased.

The EC device 100 which satisfies the condition (1) can be manufactured as follows, for example.

The first electrode 110 is formed on a transparent substrate such as a resin substrate such as plastic or a glass substrate by any physical vapor deposition method or chemical vapor deposition method. For example, the first electrode 110 is formed using a mask having a predetermined pattern so as to have a shape as illustrated in FIG. 2A. By this, the first electrode 110 is composed of a plurality of regions having different resistance values from the external power source 150. Next, a material containing the above-described organic-metallic hybrid polymer is applied on the first electrode 110 to form the EC layer 120. The means of application is not limited as long as the EC layer 120 is formed on the first electrode 110 but may be a means such as coating, dipping, or spraying when the material is liquid. By way of example, the application is performed so that the thickness of the EC layer 120 is 10 nm or more and 10 µm or less. In addition, the above-described organic-metallic hybrid polymer may be dissolved in a solvent such as methanol, ethanol, or 2-propanol.

Subsequently, an electrolyte material is applied on the EC layer 120 to form the electrolyte layer 130. The formation of the electrolyte layer 130 can be performed by applying the electrolyte material (optionally containing a polymer, a supporting salt, an ionic liquid and the like) constituting the electrolyte layer 130 described above on the electrochromic layer 120. For the application, a means such as coating, dipping, spraying, or electrolytic polymerization can be used. For example, the application is performed so that the thickness of the electrolyte layer 130 is 10 nm or more and 10 mm or less.

In this application process, the electrolyte material preferably contains a dehydrated solvent (i.e. a solvent subjected to dehydration treatment). By this, not only the coating of the electrolyte material can be facilitated but also crystallization of the above-described polymer (polymer matrix) constituting the electrolyte layer 130 can be suppressed, and a decrease in response speed can be prevented. The dehydrated solvent may preferably be at least one solvent selected from the group consisting of acetonitrile, acetone, and tetrahydrofuran.

In the same manner as for the first electrode 110, the second electrode 140 is formed on a substrate using a mask. The second electrode 140 is bonded to the first electrode 110 so that the patterns of the first electrode 110 and the second electrode 140 overlap each other, and a structure including the first electrode 110, the EC layer 120, the electrolyte layer 130, and the second electrode 140 is thus formed. Bonding can be performed by simply bringing the members into contact with each other and pressing them. Here, the first electrode 110 and the second electrode 140 have the same pattern, but either of these may be a full-surface electrode.

Subsequently, the unnecessary solvent (for example, acetonitrile used in Examples) in the structure can be removed by subjecting the structure to a heat treatment. By this, the response speed, contrast, and repeated driving stability (durability) can be improved.

The EC device 100 which satisfies the condition (2) can be manufactured as follows, for example.

The EC device 100 which satisfies the condition (2) can be manufactured by the same method as the manufacture of the EC device 100 which satisfies the condition (1) except that a predetermined pattern is not used when forming the first electrode 110 and the second electrode 140 and that a different method for forming the electrolyte layer 130 is used. The EC layer 120 is formed on the first electrode 110 formed on the entire surface of a substrate such as a transparent substrate. Subsequently, different electrolyte materials having ionic conductivities controlled are applied to a plurality of predetermined locations of the EC layer 120 to form the electrolyte layer 130 including a plurality of regions. Onto the electrolyte layer 130, the second electrode 140 formed on the entire surface of a substrate can be bonded so as to form a structure including the first electrode 110, the EC layer 120, the electrolyte layer 130, and the second electrode 140, which may be followed by subjecting the structure to a heat treatment.

A partition or a mask may be used to provide the plurality of predetermined locations. Alternatively, if the viscosity is adjusted by controlling the amount of the solvent for the electrolyte materials to be the electrolyte layer 130, it is possible to obtain the electrolyte layer 130 formed of different electrolyte materials having controlled ionic conductivities at the plurality of predetermined locations without using a partition or a mask. At this time, the amount of solvent used for the adjustment of viscosity does not affect the ionic conductivity.

In the present embodiment, an EC device which satisfies both the conditions (1) and (2) is manufactured. For example, the EC device 100 which satisfies both the conditions (1) and (2) can be manufactured by the same method as the manufacture of the EC device 100 which satisfies the condition (1) except that a different method for forming the electrolyte layer 130 is used (i.e. by forming an electrolyte layer using different electrolyte materials). Indeed, this makes it possible to provide an EC device which enables more complicated coloring and decoloring.

### (Embodiment 2)

In the second embodiment, the configuration and operation of an EC display system 1200 using the EC device 100 of the present invention described in the first embodiment will be explained

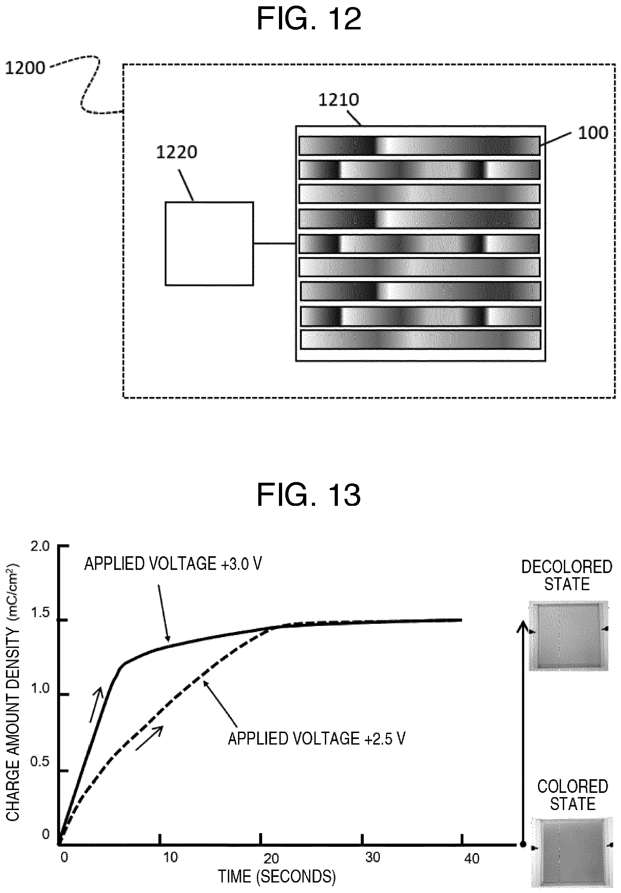

FIG. 12 is a view schematically illustrating an exemplary EC display system of the present invention.

The EC display system 1200 is equipped with at least an EC display unit 1210 including a plurality of electrochromic (EC) devices 100. Here, the plurality of EC devices 100 are the same as those described in the first embodiment and the description thereof is thus omitted. The EC display system 1200 is further equipped with a control unit 1220 that serves to control the operation of the EC display unit 1210. The control unit 1220 includes an external power source and, if necessary, a polarity inversion switch and a selection switch.

Even if the EC device of the EC display system is single, gradation and color unevenness or gradual feel can be exhibited depending on the magnitude of the applied voltage by using the EC device according to the present invention. However, the EC display system 1200 equipped with such a plurality of EC devices 100 can express non-uniform colors such as more complicated gradations and patterns, just when a voltage is applied to the respective EC devices 100 of the EC display unit 1210 by the control unit 1220.

Such an EC display system 1200 can be suitably used as light control elements such as windows and sunglasses to which a light shielding function can be partially imparted, display devices which express non-uniform colors such as gradations and patterns, and the like.

Next, the present invention will be described in detail using specific examples, but it should be noted that the present invention is not limited to these examples.

### EXAMPLES

### [Materials]

The materials used in the following examples will be described. Incidentally, all materials were special grade reagents and used without being purified. Poly(methyl methacrylate) (PMMA, weight average molecular weight (measured by GPC in terms of polystyrene, solvent for mobile phase: THF) = 350 kg/mol) was purchased from TOKYO CHEMICAL INDUSTRY CO., LTD. and Sigma-Aldrich Co. LLC. A glass substrate which had various patterns and was coated with indium tin oxide (ITO) (thickness of ITO = 0.1 µm; resistance value = 5 to 492 Ω; the coated glass substrate is hereinafter referred to as an ITO substrate for simplicity) was purchased from TECHNO PRINT CO., LTD. A glass substrate (film thickness = 0.2 µm; sheet resistance = 10 Ω/sq) of which the entire surface was coated with ITO was purchased from GEOMATEC Co., Ltd.

Methanol (MeOH), acetonitrile (ACN), and propylene carbonate were purchased from FUJIFILM Wako Pure Chemical Corporation.

Lithium perchlorate (LiClO₄) was purchased from KANTO CHEMICAL CO., INC..

A polymer material represented by Formula (A) was used as an organic-metallic hybrid polymer. The polymer material was manufactured by NARD institute, Ltd. with reference to Patent Literature 1 or F. S. Han et al., J. Am. Chem. Soc., 2008, 130 (6), pp2073-2081. Hereinafter, this organic-metallic hybrid polymer is referred to as polyFe for simplicity.

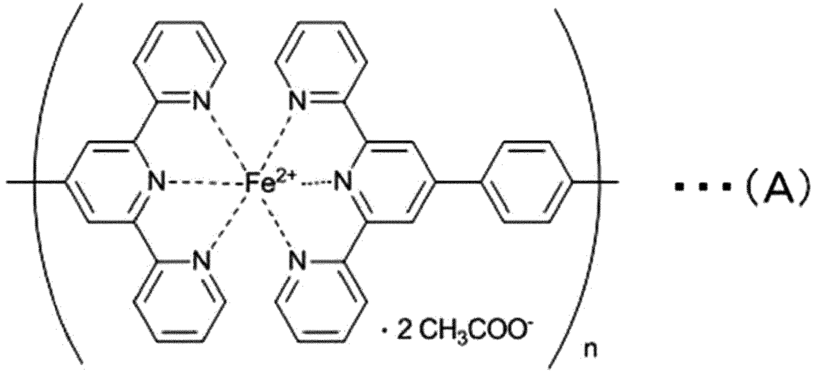

### [Reference Example 1]

In Reference Example 1, a general EC device (active surface: 100 cm²) was manufactured using an ITO substrate (full-surface electrode) as the first electrode 110, polyFe as the EC layer 120, an electrolyte material containing propylene carbonate, LiClO₄, and PMMA as the electrolyte layer 130, and an ITO substrate (full-surface electrode) as the second electrode 140.

The EC device was manufactured as follows. The EC layer 120 was formed by applying polyFe onto the ITO substrate (a glass substrate having a thickness of 1 to 3 mm with an ITO film having a thickness of 0.1 µm). A solution containing polyFe was prepared by dissolving polyFe (4 mg) in MeOH (1 mL), filtering the solution through a syringe filter (polyvinylidene fluoride (PVDF), 0.45 µm), and removing an insoluble residue. The solution (40 mL) containing polyFe thus obtained was applied onto the ITO substrate (10 × 10 cm) by a spray coating method. The thickness of the EC layer 120 was 0.3 to 0.5 µm.

Subsequently, a solution prepared by dissolving PMMA and LiClO₄ in propylene carbonate and acetonitrile was applied onto the surface of the EC layer 120, dried, and then peeled off. This process was repeated three times. By this, polyFe having a low molecular weight on the surface of the EC layer 120 was eluted and removed.

Subsequently, the electrolyte material was applied onto the EC layer 120 to form the electrolyte layer 130. LiClO₄ as a supporting salt was dissolved in propylene carbonate as a plasticizer and solvent, PMMA manufactured by TOKYO CHEMICAL INDUSTRY CO., LTD. as a polymer was added thereto, and the mixture was stirred for 1 hour under a reduced pressure to obtain a cloudy electrolyte material. Incidentally, the weight ratio among PMMA, LiClO₄, and propylene carbonate was 5 : 1 : 6. The electrolyte material obtained was dropped on the EC layer 120 by a drop casting method to form the electrolyte layer 130. The thickness of the electrolyte layer 130 was in a range of 0.1 to 1.0 mm.

The second electrode 140 was combined with the electrolyte layer 130 to obtain a structure including the ITO substrate, the polyFe film, the electrolyte layer, and the ITO substrate. The structure was placed in a dryer (ESPEC, SH-242) and dried at 100°C for 10 minutes to solidify the electrolyte material. In this manner, the EC device having a colorless and transparent solid electrolyte layer was manufactured.

The EC device obtained was provided with an electrical connection unit and connected to an external power source to apply various voltages, and the charge and discharge properties thereof were evaluated using an electrochemical analyzer (BAS Inc., ALS/CH Instruments Electrochemical Analyzer model 612B). The results are shown in FIG. 13.

FIG. 13 is a view illustrating time dependency of charge amount density when different voltages are applied to the EC device of Reference Example 1.

Before a voltage was applied to the EC device of Reference Example 1, the EC device exhibited purple color. From this fact, it was found in the EC device that polyFe in the EC layer was in a reduced state and the Fe ions of polyFe were divalent before the voltage application. The darkly indicated region exhibits purple color although illustrated in gray scale in FIG. 13. When a voltage of +3.0 V was applied to the EC device, the charge amount density changed as indicated by a solid line and a decolored state was achieved in about 5 seconds. Meanwhile, when a voltage of +2.5 V was applied to the EC device, the charge amount density changed as indicated by a dotted line and a decolored state was achieved in about 15 seconds. From this fact, it is understood that the time required for decoloring varied depending on the magnitude of the applied voltage and the above-described gradual feel could be thereby obtained in the EC device.

### [Example 2]

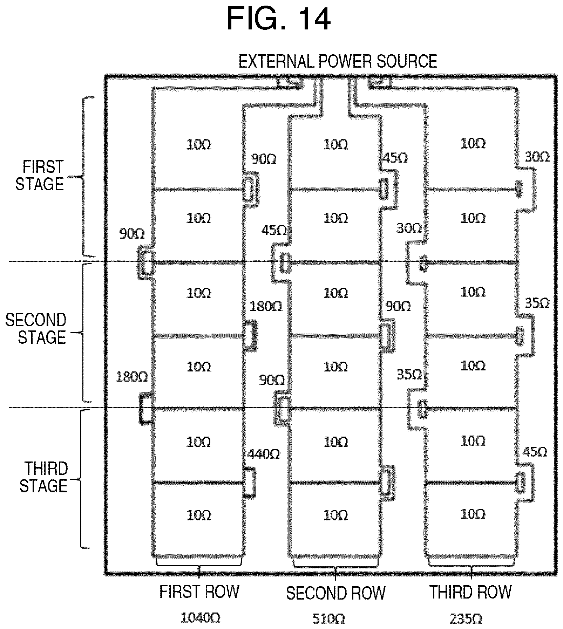

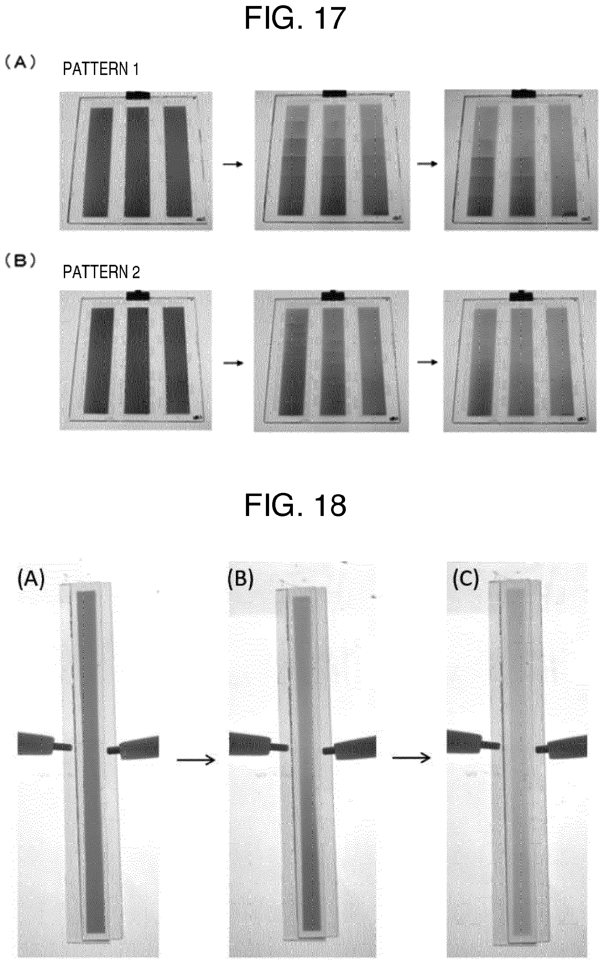

In Example 2, an EC device was manufactured using an ITO substrate (10 cm × 11 cm) including a plurality of block-shaped regions having different resistance values as the first electrode 110 and the second electrode 140, polyFe as the EC layer 120, and an electrolyte material (the weight ratio is the same as in Reference Example 1) containing propylene carbonate, LiClO₄, and PMMA as the electrolyte layer 130. The ITO substrate is illustrated in FIG. 14 and will be described later. The EC layer 120 and the electrolyte layer 130 are the same as those in Reference Example 1, and the description thereof is thus omitted. A voltage of +3.0 V and a voltage of -3.0 V were each applied to the EC device of Example 2 obtained in this manner, and the change in coloring and decoloring was observed. The results are illustrated in FIG. 17(A).

### [Example 3]

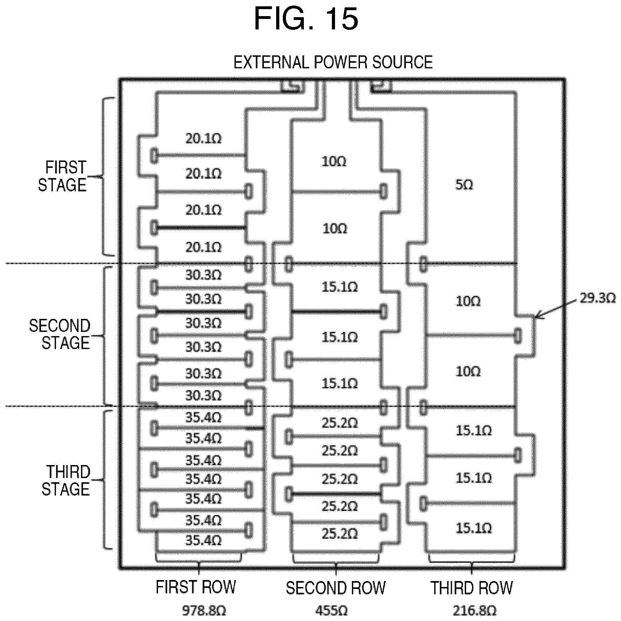

Example 3 is the same as Example 2 except that an ITO substrate different from that in Example 2 was used, and the description thereof is thus omitted. The ITO substrate is illustrated in FIG. 15 and will be described later. A voltage of +3.0 V and a voltage of -3.0 V were each applied to the EC device of Example 3, and the change in coloring and decoloring was observed. The results are illustrated in FIG. 17(B).

### [Example 4]

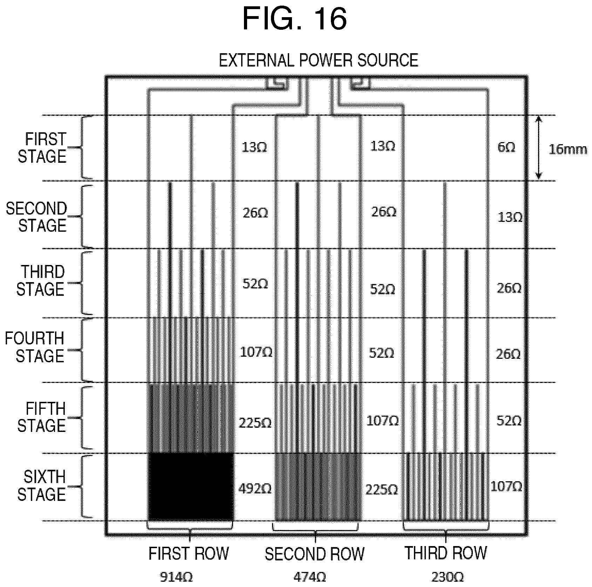

Example 4 is the same as Example 2 except that an ITO substrate including a plurality of linear regions having different resistance values was used unlike in Example 2, and the description thereof is thus omitted. The ITO substrate is illustrated in FIG. 16 and will be described later. A voltage of +3.0 V and a voltage of -3.0 V were each applied to the EC device of Example 4, and the change in coloring and decoloring was observed.

FIG. 14 is a schematic view illustrating the ITO substrate in Example 2.

FIG. 15 is a schematic view illustrating the ITO substrate in Example 3.

FIG. 16 is a schematic view illustrating the ITO substrate in Example 4.

According to FIG. 14, the ITO substrate includes three rows of electrodes in Example 2. The electrode in each row further includes three regions of the first, second, and third stages as regions having different resistance values from the external power source. The resistance value increases in the order of the first stage, second stage, and third stage from the external power source side, and the entire resistance value decreases in the order of the first row, the second row, and the third row. In addition, the numbers of block-shaped regions in the first to third stages are the same.

According to FIG. 15, in Example 3 as well, the ITO substrate includes three rows of electrodes and the electrode in each row further includes three regions of the first, second, and third stages as regions having different resistance values from the external power source in the same manner as in Example 2. The resistance value increases in the order of the first stage, second stage, and third stage from the external power source side, and the entire resistance value decreases in the order of the first row, the second row, and the third row, but the values thereof are different from those in Example 2. In addition, the number of block-shaped regions in the first to third stages decreases from the first row toward the third row.

According to FIG. 16, the ITO substrate includes three rows of electrodes in Example 4. The electrode in each row further includes six regions of the first to sixth stages of which the resistance value sequentially increases from the external power source side as regions having different resistance values from the external power source. In addition, the entire resistance value decreases in the order of the first row, the second row, and the third row.

FIGS. 17(A) and 17(B) are views illustrating coloring and decoloring appearance of the EC devices of Example 2 and Example 3 after voltage application, respectively.

FIG. 17(A) illustrates the appearance before the voltages were applied to the EC device of Example 2, the appearance in 5 seconds after the voltage of +3.0 V was applied, and the appearance in 10 seconds after the voltage of +3.0 V was applied from the left. Before voltage application, the EC devices of Example 2 exhibited the same purple color in all three rows (left). After the voltage of +3.0 V was applied, there was a tendency that decoloring occurred in 5 seconds in order from the external power source side (middle). When 5 seconds further elapsed, the decoloring further proceeded (right). In particular, noticeably, it was confirmed that gradation was exhibited as the resistance value increased from the external power source side and gradation more gradually changed as the entire resistance value of the electrode was made greater.

FIG. 17(B) also illustrates the appearance before the voltages were applied to the EC device of Example 3, the appearance in 5 seconds after the voltage of +3.0 V was applied, and the appearance in 10 seconds after the voltage of +3.0 V was applied from the left. In the EC device of Example 3 as well, there was the same tendency as that in Example 2, but it was found that decoloring (or coloring) was delayed and finer gradation could be achieved by more finely providing the plurality of block-shaped regions.

In the EC device of Example 4 as well, there was the same tendency as that in Example 2 and Example 3 although not illustrated. Moreover, in all of the EC devices of Examples 2 to 4, gradation opposite to that in FIG. 17 was exhibited when the voltage of -3.0 V was applied.

From these results, it was revealed that as the condition (1) was satisfied, voltage distribution (non-uniform potential difference) occurred in the EC layer by applying the voltage; that the charge amount accumulated and the time until the charge amount was accumulated were then non-uniform; and that gradation, color unevenness and non-uniformity of the coloring and decoloring speed (gradual feel) according to non-uniform time required for charge amount accumulation could be achieved.

### [Example 5]

In Example 5, a general EC device (active surface: 19.5 cm²) was manufactured using an ITO substrate (full-surface electrode) as the first electrode 110, polyFe as the EC layer 120, an electrolyte material containing propylene carbonate, LiClO₄, and PMMA as the electrolyte layer 130, and an ITO substrate (full-surface electrode) as the second electrode 140. However, the electrolyte layer 130 includes two regions formed using two kinds of electrolyte materials having different viscosities.

The EC layer 120 was formed on an ITO substrate in the same manner as in Reference Example 1 except that an ITO substrate (1.5 cm × 13 cm) was used and 15 mL of a solution containing polyFe was applied, and the surface thereof was treated.

For the electrolyte material, LiClO₄ as a supporting salt and propylene carbonate as a plasticizer were dissolved in ACN as a solvent, PMMA manufactured by TOKYO CHEMICAL INDUSTRY CO., LTD. and PMMA manufactured by Sigma-Aldrich Co. LLC. as a polymer were each added thereto, and the mixtures were stirred for 2 to 3 hours, thereby preparing two kinds of colorless and transparent electrolyte materials. Incidentally, the weight ratio among PMMA, LiClO₄, propylene carbonate, and ACN was 7 : 3 : 20 : 70. The electrolyte material containing PMMA manufactured by TOKYO CHEMICAL INDUSTRY CO., LTD. was a highly viscous electrolyte material, and the electrolyte material containing PMMA manufactured by Sigma-Aldrich Co. LLC. was a low viscous electrolyte material. The ionic conductivities of these were in a range of 0.01 S/m or more and 0.5 S/m or less, but the ionic conductivity of the highly viscous electrolyte material was lower than that of the low viscous electrolyte material.

As illustrated in FIG. 10, the highly viscous electrolyte material was dropped on one region on the EC layer 120 by a drop casting method and dried for 2 to 3 hours. Subsequently, a low viscous electrolyte material was dropped on the other region in the same manner and dried. The electrolyte layer 130 including two regions formed of two different electrolyte materials was thus formed. The thickness of the electrolyte layer 130 was in a range of 0.1 to 1.0 mm.

The second electrode 140 was combined with the electrolyte layer 130 to obtain a structure including the ITO substrate, the polyFe film, the electrolyte layer, and the ITO substrate. The structure was left to stand at room temperature for 24 hours to remove an unnecessary portion of the solvent. Subsequently, this structure was placed in a vacuum oven (EYELA, VOS-201SD) and heated at 100°C for 3 hours at a relative humidity of 40%. A voltage of +3.0 V and a voltage of -3.0 V were each applied to the EC device of Example 5 obtained in this manner, and the change in coloring and decoloring was observed. The results are illustrated in FIG. 18.

FIG. 18 is a view illustrating coloring and decoloring appearance of the EC device of Example 5 after voltage application.

FIG. 18 illustrates (A) the appearance before the voltages were applied, (B) the appearance in 5 seconds after the voltage of +3.0 V was applied, and (C) the appearance in 10 seconds after the voltage of +3.0 V was applied. According to FIG. 18(A), the EC device of Example 5 exhibited uniform purple color before the voltage application. According to FIG. 18(B), the low viscous electrolyte material (the upper half of the figure) tended to be first decolored in 5 seconds after the voltage of 3.0 V was applied. According to FIG. 18(C), the decoloring further proceeded when 5 seconds further elapsed. When the voltage of -3.0 V was applied, gradation opposite to that in FIG. 18 was exhibited.

From these results, it was revealed that as the condition (2) was satisfied, voltage distribution (non-uniform potential difference) occurred in the EC layer by the voltage application,; that the accumulated charge amount and the time until the charge amount was accumulated were non-uniform; and that gradation, color unevenness and non-uniformity in the coloring and decoloring speed (gradual feel) according to non-uniform time required for charge amount accumulation could be achieved.

None of Examples 1-5 are an embodiment of the present invention since conditions (1) and (2) are not satisfied at the same time. Nevertheless, Examples 1-5 are useful for understanding the invention.

### INDUSTRIAL APPLICABILITY

The EC device of the present invention can be applied to light control elements such as windows and sunglasses to which a light shielding function can be partially imparted, display devices which express non-uniform colors such as gradations and patterns, and the like.

### REFERENCE SIGNS LIST

- 100: Electrochromic (EC) device
- 110: First electrode
- 120: Electrochromic (EC) layer
- 130: Electrolyte layer
- 140: Second electrode
- 150: External power source
- 111: Electric wiring
- 112: Substrate
- 113: Mechanical connection
- 114: Metal pattern
- 1200: EC display system
- 1210: EC display unit
- 1220: Control unit

## Claims

1. An electrochromic, EC, device (100) comprising:
a first electrode (110);
an electrochromic layer (120) that is located on the first electrode (110) and formed of an electrochromic material;
an electrolyte layer (130) located on the electrochromic layer (120); and
a second electrode (140) located on the electrolyte layer (130), wherein both of the following conditions (1) and (2) are satisfied:
(1) a plurality of resistors having different resistance values are provided between the first electrode (110) and the electrochromic layer (120) and/or a plurality of resistors having different resistance values are provided between the electrolyte layer (130) and the second electrode (140), such that the first electrode (110) and/or the second electrode (140) include a plurality of first regions wherein said different resistance values associated with each first region result in a pattern of voltage distribution occurring in the electrochromic layer (120) when the first and second electrodes (110, 140) are connected to a power source and a voltage is applied to the electrochromic layer (120), wherein each of the plurality of resistors is a variable resistance element or a varistor; and
(2) the electrolyte layer (130) includes a plurality of second regions formed of different electrolyte materials;
wherein the plurality of first regions are arranged so that the resistance values sequentially increase in two or more directions from a first region at one end toward a first region at the other end in the condition (1);
wherein each of the plurality of second regions has a different ionic conductivity, and the plurality of second regions are arranged so that an ionic conductivity in each of the plurality of second regions sequentially increases in two or more directions from a second region at one end toward a second region at the other end in the condition (2);
wherein the electrochromic material contains an organic-metallic hybrid polymer containing an organic ligand and a metal ion coordinated to the organic ligand; and
wherein the organic-metallic hybrid polymer is at least one organic-metallic hybrid polymer represented by a formula selected from the group consisting of Formulas (I), (II), and (III): 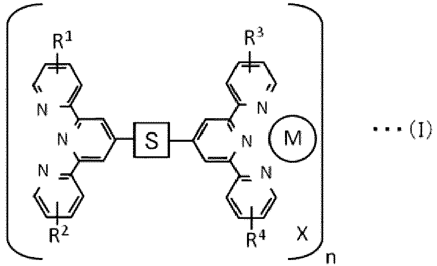 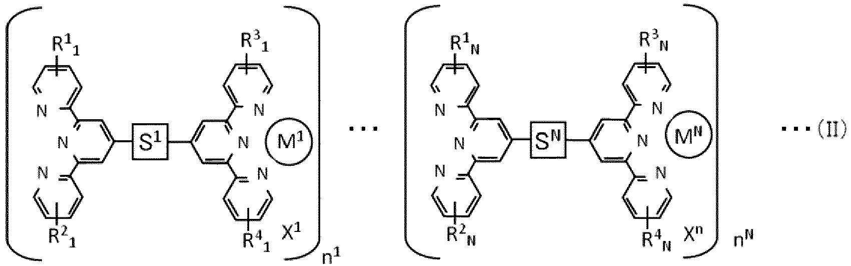 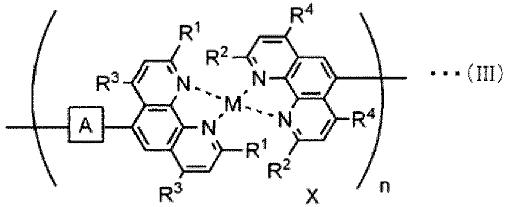 in Formula (I), M denotes a metal ion, X denotes a counter anion, S denotes a spacer containing a carbon atom and a hydrogen atom or a spacer directly connecting two terpyridine groups to each other, R¹ to R⁴ each independently denote a hydrogen atom or a substituent, and n is an integer of 2 or more indicating a degree of polymerization,
in Formula (II), M¹ to M^{N} (N is an integer of 2 or more) each independently denote a metal ion having a different redox potential, X¹ to Xⁿ (n is an integer of 2 or more) each independently denote a counter anion, S¹ to S^{N} (N is an integer of 2 or more) each independently denote a spacer containing a carbon atom and a hydrogen atom or a spacer directly connecting two terpyridine groups to each other, R¹₁ to R¹_{N}, R²₁ to R²_{N}, R³₁ to R³_{N}, and R⁴₁ to R⁴_{N} (N is an integer of 2 or more) each independently denote a hydrogen atom or a substituent, and n¹ to n^{N} are each independently an integer of 2 or more indicating a degree of polymerization, and
in Formula (III), M denotes a metal ion, X denotes a counter anion, A denotes a spacer containing a carbon atom and a hydrogen atom or a spacer directly connecting two phenanthroline groups to each other, R¹ to R⁴ each independently denote a hydrogen atom or a substituent, and n is an integer of 2 or more indicating a degree of polymerization.

2. The EC device according to claim 1, wherein each of the plurality of first regions is an electrode (110, 140) having a block shape and/or a linear shape in the condition (1).

3. The EC device according to any one of claims 1 to 2, wherein each of the plurality of first regions has a different resistance value in a range of 5Ω or more and 500Ω or less in the condition (1).

4. The EC device according to any one of claims 1 to 3, wherein the plurality of first regions in the first electrode (110) and the plurality of first regions in the second electrode (140) face each other in the condition (1).

5. The EC device according to any one of claims 1 to 4, wherein each of the plurality of first regions is connected to an external power source in series or connected to an external power source in parallel in the condition (1).

6. The EC device according to any one of claims 1 to 5, wherein each of the plurality of second regions has a different ionic conductivity in a range of 0.01 S/m or more and 0.5 S/m or less in the condition (2).

7. The EC device according to any one of claims 1 to 6, wherein the metal ion is at least one metal ion selected from the group consisting of Pt, Cu, Ni, Pd, Ag, Mo, Fe, Co, Ru, Rh, Eu, Zn, and Mn.

8. An EC display system comprising a power source and an EC display unit, wherein
the EC display unit includes a plurality of EC devices, wherein
each of the plurality of EC devices is the EC device according to any one of claims 1 to 7.

## Patentansprüche

1. Elektrochrome, EC, Vorrichtung (100), die Folgendes umfasst:
eine erste Elektrode (110);
eine elektrochrome Schicht (120), die auf der ersten Elektrode (110) angeordnet ist und aus einem elektrochromen Material gebildet ist;
eine Elektrolytschicht (130), die auf der elektrochromen Schicht (120) angeordnet ist; und
eine zweite Elektrode (140), die auf der Elektrolytschicht (130) angeordnet ist, wobei beide der folgenden Bedingungen (1) und (2) erfüllt sind:
(1) eine Vielzahl von Widerständen mit unterschiedlichen Widerstandswerten ist zwischen der ersten Elektrode (110) und der elektrochromen Schicht (120) vorgesehen und/oder eine Vielzahl von Widerständen mit unterschiedlichen Widerstandswerten ist zwischen der Elektrolytschicht (130) und der zweiten Elektrode (140) vorgesehen, so dass die erste Elektrode (110) und/oder die zweite Elektrode (140) eine Vielzahl von ersten Bereichen aufweisen, wobei die unterschiedlichen Widerstandswerte, die jedem ersten Bereich zugeordnet sind, zu einem Muster der Spannungsverteilung führen, das in der elektrochromen Schicht (120) auftritt, wenn die ersten und zweiten Elektroden (110, 140) mit einer Stromquelle verbunden sind und eine Spannung an die elektrochrome Schicht (120) angelegt wird, wobei jeder der Vielzahl von Widerständen ein Element mit variablem Widerstand oder ein Varistor ist; und
(2) die Elektrolytschicht (130) weist eine Vielzahl von zweiten Bereichen auf, die aus unterschiedlichen Elektrolytmaterialien gebildet sind;
wobei die Vielzahl von ersten Bereichen so angeordnet ist, dass die Widerstandswerte im Zustand (1) sequentiell in zwei oder mehr Richtungen von einem ersten Bereich an einem Ende zu einem ersten Bereich am anderen Ende zunehmen;
wobei jeder der Vielzahl von zweiten Bereichen eine unterschiedliche Ionenleitfähigkeit aufweist, und die Vielzahl von zweiten Bereichen so angeordnet ist, dass eine ionische Leitfähigkeit im Zustand (2) in jedem der Vielzahl der zweiten Bereiche sequentiell in zwei oder mehr Richtungen von einem zweiten Bereich an einem Ende zu einem zweiten Bereich an dem anderen Ende zunimmt;
wobei das elektrochrome Material ein organisch-metallisches Hybridpolymer enthält, das einen organischen Liganden und ein an den organischen Liganden koordiniertes Metallion enthält; und
wobei das organisch-metallische Hybridpolymer mindestens ein organisch-metallisches Hybridpolymer ist, das durch eine Formel dargestellt wird, die aus der Gruppe ausgewählt ist, die aus den Formeln (I), (II) und (III) besteht: 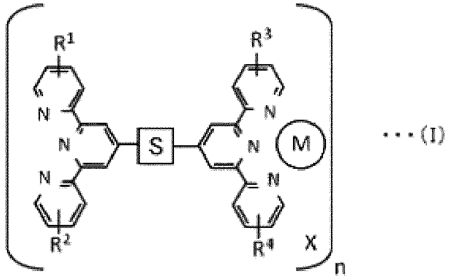 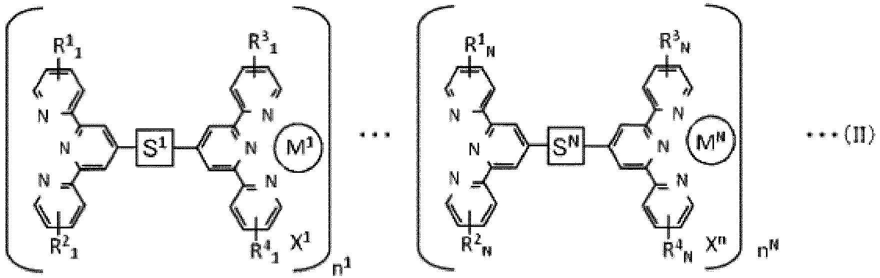 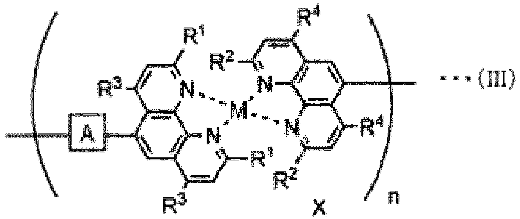
wobei in Formel (I) M ein Metallion, X ein Gegenanion, S einen Spacer, der ein Kohlenstoffatom und ein Wasserstoffatom enthält, oder einen Spacer, der zwei Terpyridingruppen direkt miteinander verbindet, bezeichnet, R¹ bis R⁴ jeweils unabhängig voneinander ein Wasserstoffatom oder einen Substituenten bezeichnen und n eine ganze Zahl von 2 oder mehr ist, die einen Polymerisationsgrad angibt,
in Formel (II) M¹ bis M^{N} (N ist eine ganze Zahl von 2 oder mehr) jeweils unabhängig voneinander ein Metallion mit einem unterschiedlichen Redoxpotential bezeichnen, X¹ bis Xⁿ (n ist eine ganze Zahl von 2 oder mehr) jeweils unabhängig voneinander ein Gegenanion bezeichnen, S¹ bis S^{N} (N ist eine ganze Zahl von 2 oder mehr) jeweils unabhängig voneinander einen Spacer, der ein Kohlenstoffatom und ein Wasserstoffatom enthält, oder einen Spacer, der zwei Terpyridin-Gruppen direkt miteinander verbindet, bezeichnen, R¹₁ bis R¹_{N}, R²₁ bis R²_{N}, R³₁ bis R³_{N} und R⁴₁ bis R⁴_{N} (N ist eine ganze Zahl von 2 oder mehr) jeweils unabhängig voneinander ein Wasserstoffatom oder einen Substituenten bezeichnen, und n¹ bis n^{N} jeweils unabhängig voneinander eine ganze Zahl von 2 oder mehr sind, die einen Polymerisationsgrad angibt, und
in Formel (III) M ein Metallion, X ein Gegenanion, A einen Spacer, der ein Kohlenstoffatom und ein Wasserstoffatom enthält, oder einen Spacer, der zwei Phenanthrolingruppen direkt miteinander verbindet, bezeichnet, R¹ bis R⁴ jeweils unabhängig voneinander ein Wasserstoffatom oder einen Substituenten bezeichnen und n eine ganze Zahl von 2 oder mehr ist, die einen Polymerisationsgrad angibt.

2. EC-Vorrichtung nach Anspruch 1, wobei jeder der Vielzahl von ersten Bereichen eine Elektrode (110, 140) mit einer Blockform und/oder einer linearen Form im Zustand (1) ist.

3. EC-Vorrichtung nach einem der Ansprüche 1 bis 2, wobei jeder der Vielzahl von ersten Bereichen im Zustand (1) einen unterschiedlichen Widerstandswert in einem Bereich von 5 Ω oder mehr und 500 Ω oder weniger aufweist.

4. EC-Vorrichtung nach einem der Ansprüche 1 bis 3, wobei die Vielzahl der ersten Bereiche in der ersten Elektrode (110) und die Vielzahl der ersten Bereiche in der zweiten Elektrode (140) in dem Zustand (1) einander gegenüberliegen.

5. EC-Vorrichtung nach einem der Ansprüche 1 bis 4, wobei jeder der Vielzahl von ersten Bereichen im Zustand (1) in Reihe mit einer externen Stromquelle oder parallel mit einer externen Stromquelle verbunden ist.

6. EC-Vorrichtung nach einem der Ansprüche 1 bis 5, wobei jeder der Vielzahl von zweiten Bereichen im Zustand (2) eine unterschiedliche Ionenleitfähigkeit in einem Bereich von 0,01 S/m oder mehr und 0,5 S/m oder weniger aufweist.

7. EC-Vorrichtung nach einem der Ansprüche 1 bis 6, wobei das Metallion mindestens ein Metallion ist, das aus der Gruppe ausgewählt ist, die aus Pt, Cu, Ni, Pd, Ag, Mo, Fe, Co, Ru, Rh, Eu, Zn und Mn besteht.

8. EC-Anzeigesystem, das eine Stromquelle und eine EC-Anzeigeeinheit enthält, wobei die EC-Anzeigeeinheit eine Vielzahl von EC-Vorrichtungen umfasst, wobei jede der Vielzahl von EC-Vorrichtungen die EC-Vorrichtung nach einem der Ansprüche 1 bis 7 ist.

## Revendications

1. Dispositif électrochromique, EC, (100) comprenant :
une première électrode (110) ;
une couche électrochromique (120) qui est située sur la première électrode (110) et formée d'un matériau électrochromique ;
une couche d'électrolyte (130) située sur la couche électrochromique (120) ; et
une deuxième électrode (140) située sur la couche d'électrolyte (130), dans lequel les deux conditions suivantes (1) et (2) sont satisfaites :
(1) une pluralité de résistances ayant différentes valeurs de résistance sont disposées entre la première électrode (110) et la couche électrochromique (120) et/ou une pluralité de résistances ayant des valeurs de résistance différentes sont prévues entre la couche d'électrolyte (130) et la deuxième électrode (140), de sorte que la première électrode (110) et/ou la deuxième l'électrode (140) comprennent une pluralité de premières régions dans lequel lesdites valeurs de résistance différentes associées à chaque première région entraînent un motif de distribution de tension se produisant dans la couche électrochromique (120) lorsque les première et deuxième électrodes (110, 140) sont connectées à un une source d'alimentation et une tension est appliquée à la couche électrochromique (120), dans lequel chacune de la pluralité de résistances est un élément à résistance variable ou une varistance ; et
(2) la couche d'électrolyte (130) comprend une pluralité de deuxièmes régions formées de différents matériaux d'électrolyte ;
dans lequel la pluralité de premières régions sont agencées de sorte que les valeurs de résistance augmentent séquentiellement dans deux ou plusieurs directions à partir d'une première région au niveau d'une extrémité vers une première région au niveau de l'autre extrémité dans la condition (1);
dans lequel chacune de la pluralité de deuxièmes régions a une conductivité ionique différente, et la pluralité de deuxièmes régions sont agencées de sorte qu'une conductivité ionique dans chacune de la pluralité de deuxièmes régions augmente séquentiellement dans deux ou plusieurs directions à partir d'une deuxième région au niveau d'une extrémité vers une deuxième région au niveau l'autre extrémité dans la condition (2) ;
dans lequel le matériau électrochromique contient un polymère hybride organique-métallique contenant un ligand organique et un ion métallique coordonné au ligand organique ; et
dans lequel le polymère hybride organique-métallique est au moins un polymère hybride organique-métallique représenté par une formule choisie dans le groupe constitué par les formules (I), (II) et (III) : 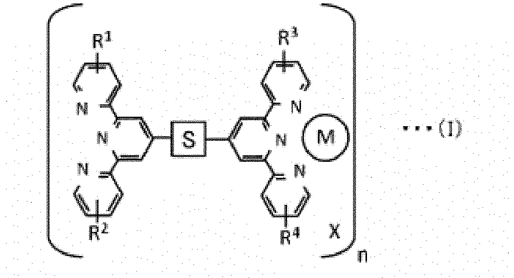 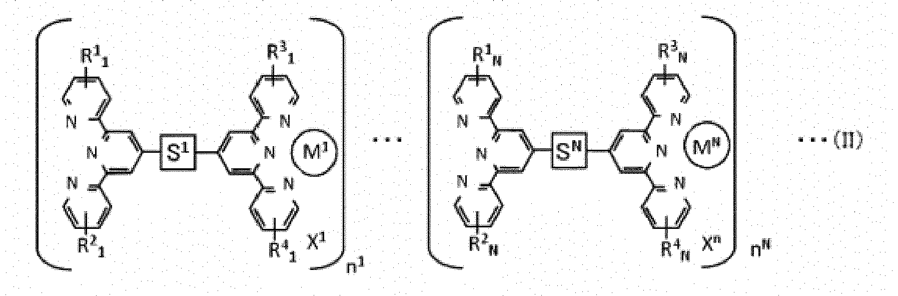 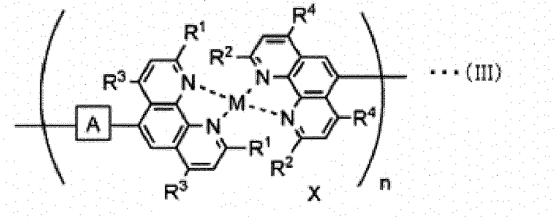
dans la formule (I), M désigne un ion métallique, X désigne un contre-anion, S désigne un espaceur contenant un atome de carbone et un atome d'hydrogène ou un espaceur connectant directement deux groupes terpyridine entre eux, R¹ à R⁴ désignent chacun indépendamment un atome d'hydrogène ou un substituant, et n est un entier de 2 ou plus indiquant un degré de polymérisation,
dans la formule (II), M¹ à M^{N} (N est un entier de 2 ou plus) désignent chacun indépendamment un ion métallique ayant un potentiel redox différent, X¹ à Xⁿ (n est un entier de 2 ou plus) désignent chacun indépendamment un contre-anion, S¹ à S^{N} (N est un entier de 2 ou plus) désignent chacun indépendamment un espaceur contenant un atome de carbone et un atome d'hydrogène ou un espaceur connectant directement deux groupes terpyridine entre eux, R¹₁ à R¹_{N}, R²₁ à R²_{N}, R³₁ à R³_{N} et R⁴₁ à R⁴_{N} (N est un entier er de 2 ou plus) désignent chacun indépendamment un atome d'hydrogène ou un substituant, et n¹ à n^{N} sont chacun indépendamment un nombre entier de 2 ou plus indiquant un degré de polymérisation, et
dans la formule (III), M désigne un ion métallique, X désigne un contre-anion, A désigne un espaceur contenant un atome de carbone et un atome d'hydrogène ou un espaceur connectant directement deux groupes phénanthroline entre eux, R¹ à R⁴ désignent chacun indépendamment un atome d'hydrogène ou un substituant, et n est un nombre entier de 2 ou plus indiquant un degré de polymérisation.

2. Dispositif EC selon la revendication 1, dans lequel chacune de la pluralité de premières régions est une électrode (110, 140) ayant une forme de bloc et/ou une forme linéaire dans la condition (1).

3. Dispositif EC selon l'une quelconque des revendications 1 à 2, dans lequel chacune de la pluralité de premières régions a une valeur de résistance différente dans une plage de 5Ω ou plus et 500Ω ou moins dans la condition (1).

4. Dispositif EC selon l'une quelconque des revendications 1 à 3, dans lequel la pluralité de premières régions dans la première électrode (110) et la pluralité de premières régions dans la deuxième électrode (140) se font face dans la condition (1).

5. Dispositif EC selon l'une quelconque des revendications 1 à 4, dans lequel chacune de la pluralité de premières régions est connectée à une source d'alimentation externe en série ou connectée à une source d'alimentation externe en parallèle dans la condition (1).

6. Dispositif EC selon l'une quelconque des revendications 1 à 5, dans lequel chacune de la pluralité de deuxièmes régions a une conductivité ionique différente dans une plage de 0,01 S/m ou plus et 0,5 S/m ou moins dans la condition (2).

7. Dispositif EC selon l'une quelconque des revendications 1 à 6, dans lequel l'ion métallique est au moins un ion métallique choisi dans le groupe constitué de Pt, Cu, Ni, Pd, Ag, Mo, Fe, Co, Ru, Rh, Eu, Zn et Mn.

8. Système d'affichage EC comprenant une source d'alimentation et une unité d'affichage EC, dans lequel l'unité d'affichage EC comprend une pluralité de dispositifs EC, dans lequel chacun de la pluralité de dispositifs EC est le dispositif EC selon l'une quelconque des revendications 1 à 7.
